# EUROPÄISCHE PATENTSCHRIFT

(11) **EP 4 042 866 B1**
(45) Veröffentlichungstag und Bekanntmachung des Hinweises auf die Patenterteilung: **06.05.2026**
(21) Anmeldenummer: 22156110.3
(22) Anmeldetag: 10.02.2022
(51) Int. Cl.: A01M 21/02, A01M 7/00, A01B 79/00, A01B 39/18

(54) **VERFAHREN UND VORRICHTUNG ZUR GEZIELTEN ABGABE EINES WIRKMITTELS AUF EINEN BODEN**
METHOD AND DEVICE FOR TARGETED DELIVERY OF ACTIVE AGENT TO SOIL
PROCÉDÉ ET DISPOSITIF DE DISTRIBUTION CIBLÉE D'UN AGENT ACTIF SUR UN SOL

(30) Priorität: 11.02.2021 DE 102021201308
(43) Veröffentlichungstag der Anmeldung: 17.08.2022
(73) Patentinhaber: Hochschule für Wirtschaft und Umwelt Nürtingen-Geislingen (HfWU), 72622 Nürtingen (DE)
(72) Erfinder: MARTIN, Fabio, 88696 Owingen (DE); LOHRMANN, Georg, 73312 Geislingen (DE); STOLL, Albert, 72622 Nürtingen (DE)
(74) Vertreter: Müller-Boré & Partner Patentanwälte PartG mbB

(56) Entgegenhaltungen:
- DE-A1- 102015 209 879
- DE-A1- 102015 209 891
- DE-A1- 4 039 797
- FR-A1- 3 093 614
- IT-A1- UA20 164 822

## Beschreibung

Die Erfindung betrifft ein Verfahren und eine Vorrichtung zur gezielten Abgabe eines Wirkmittels auf einen Boden bzw. Erdboden, insbesondere auf eine landwirtschaftliche Nutzfläche, zum Bekämpfen von pflanzlichem Bewuchs.

Böden, bspw. landwirtschaftliche Flächen und insbesondere Nutzflächen, dienen insbesondere dem Anbau von Pflanzen, beispielsweise Nutzpflanzen. Es kann jedoch vorkommen, dass auf den landwirtschaftlichen Flächen auch unerwünschte Pflanzentypen wachsen, beispielsweise giftige Pflanzentypen bzw. Unkräuter. Zur Bekämpfung von unerwünschten Pflanzentypen sind chemische und händische Verfahren bekannt. Chemische Verfahren, welche insbesondere den Einsatz von chemischen Pflanzenvernichtungsmitteln vorsehen, sind aufgrund einer möglichen chemischen Belastung des Bodens, des Grundwassers, der Nutzpflanzen und/oder der Umwelt mit dem chemischen Pflanzenvernichtungsmittel in der Regel unerwünscht. Des Weiteren sind händische Verfahren, mit denen unerwünschte Pflanzentypen aus einer landwirtschaftlichen Fläche entfernt werden, sehr aufwendig und insbesondere kosten- und zeitintensiv.

Ferner betrifft die DE 10 2015 209891 A1 eine Vorrichtung zur Beschädigung von Unkraut mit einer Druckfördereinheit, welche ausgebildet ist, eine Flüssigkeit unter Druck weiterzuleiten, und einer Flüssigkeitsabgabeeinheit, welche fluidisch mit der Druckfördereinheit verbunden ist und ferner ausgebildet ist, die unter Druck befindliche Flüssigkeit an das Unkraut abzugeben, um dieses zu beschädigen.

Die FR 3 093 614 A1 betrifft eine kollaborative Vorrichtung zur Steuerung der Behandlung einer landwirtschaftlichen Parzelle, die dazu bestimmt ist, auf einer landwirtschaftlichen Maschine montiert zu werden, umfassend einen Satz von Detektoren für Unkräuter oder Blattmangelerscheinungen oder -krankheiten, die zur Entscheidung zur Steuerung der Behandlungsgeräte der landwirtschaftlichen Parzelle ausgebildet sind.

Die IT UA20 164 822 A1 betrifft eine Vorrichtung zum Jäten eines Bodens durch Aufsprühen eines Hochdruck-Arbeitsfluids, wobei die Vorrichtung mit einem Traktor oder einer ähnlichen landwirtschaftlichen Maschine verwendet werden kann, die in der Lage ist, sich auf dem Boden entlang einer Vorwärtsrichtung vorwärts zu bewegen, wobei die Vorrichtung mindestens einen Tank für das Arbeitsfluid, mindestens eine Hochdruckpumpe, die in der Lage ist, das Arbeitsfluid mit einem Arbeitsdruck von mindestens 400 bar zu pumpen, und mindestens eine Vorrichtung zum Versprühen des Arbeitsfluids auf den zu jätenden Boden umfasst.

Es ist daher Aufgabe der vorliegenden Erfindung ein Verfahren und eine Vorrichtung vorzuschlagen, welche es ermöglichen, unerwünschte Pflanzentypen auf Böden bzw. Flächen, insbesondere landwirtschaftlichen (Nutz-) Flächen gezielt zu bekämpfen und Nachteile herkömmlicher Verfahren zu überwinden.

Diese Aufgabe wird durch die Gegenstände der unabhängigen Ansprüche gelöst. Bevorzugte Ausführungsformen sind in den abhängigen Ansprüchen definiert.

Ein Aspekt der Erfindung betrifft ein Verfahren zur gezielten Abgabe eines Wirkmittels auf einen Boden bzw. Erdboden, insbesondere auf eine landwirtschaftliche (Nutz-) Fläche, wobei das Verfahren folgende Schritte aufweist:
Bewegen einer Wirkmittelabgabeeinheit entlang einer Bewegungsrichtung über den Boden, wobei durch Aktivieren der Wirkmittelabgabeeinheit eine Abgabe des Wirkmittels in einem begrenzten Wirkungsbereich auf den Boden erfolgt;
Abgleichen einer augenblicklichen Position der Wirkmittelabgabeeinheit mit einer Ortsinformation eines auf dem Boden auftretenden ersten Pflanzentyps. In einer ersten Alternative umfasst das Verfahren ferner: Aktivieren der Wirkmittelabgabeeinheit, wenn die augenblickliche Position der Wirkmittelabgabeeinheit bzw. der Wirkungsbereich der Wirkmittelabgabeeinheit im Wesentlichen der Ortsinformation des ersten Pflanzentyps entspricht, wobei durch Abgabe des Wirkmittels eine mechanische Beschädigung von innerhalb des Wirkungsbereichs befindlichen pflanzlichem Bewuchs erfolgt. In einer zweiten Alternative umfasst das Verfahren weiter: Deaktivieren einer aktivierten Wirkmittelabgabeeinheit, wenn die augenblickliche Position der Wirkmittelabgabeeinheit bzw. der Wirkungsbereich der Wirkmittelabgabeeinheit im Wesentlichen der Ortsinformation des ersten Pflanzentyps entspricht.

Vorteilhafterweise ermöglicht das erfindungsgemäße Verfahren, dass unerwünschter pflanzlicher Bewuchs, welcher in der ersten Alternative dem ersten Pflanzentyp entspricht und auf dem Boden bzw. der landwirtschaftlichen Fläche vorhanden ist, selektiv und gezielt durch eine durch das Wirkmittel verursachte physikalische, insbesondere mechanische, Krafteinwirkung bekämpft werden kann. Somit kann die Bekämpfung von unerwünschten Pflanzentypen vorzugsweise ohne chemische Verfahren, beispielsweise ohne den Einsatz von chemischen Pflanzenvernichtungsmitteln, oder durch einen reduzierten Einsatz von chemischen Pflanzenvernichtungsmitteln erfolgen.

In der zweiten Alternative kann der erste Pflanzentyp erwünschter pflanzlicher Bewuchs, insbesondere Nutzpflanzen, sein, welche zur Nutzung und/oder Ernte vorgesehen ist. Vorteilhafterweise ermöglicht die zweite Alternative, dass durch die Deaktivierung der bereits aktivierten Wirkmittelabgabeeinheit das Wirkmittel auf Bereiche zwischen Nutzpflanzen, die unerwünschten pflanzlichen Bewuchs aufweisen können, abgegeben wird und nicht unmittelbar auf Nutzpflanzen. Insbesondere kann vorgesehen sein, dass die Wirkmittelabgabeeinheit während des Bewegens der Wirkmittelabgabeeinheit entlang einer Bewegungsrichtung aktiviert ist und zeitweise deaktiviert wird, wenn sich pflanzlicher Bewuchs des ersten Pflanzentyps (erwünschter pflanzlicher Bewuchs) im Wirkungsbereich der Wirkmittelabgabeeinheit befindet. Vorteilhafterweise können somit Bereiche zwischen Nutzpflanzen, die in Bewegungsrichtung der Wirkmittelabgabeeinheit im Wesentlichen in Reihe angeordnet sind, von unerwünschtem pflanzlichem Bewuchs befreit werden, wobei der erwünschte pflanzliche Bewuchs durch das Wirkmittel nicht bekämpft wird.

Insbesondere kann vorgesehen sein, dass das Wirkmittel derart abgegeben wird, dass der oberirdische Teil (oberhalb des Bodens bzw. der landwirtschaftlichen Fläche) des pflanzlichen Bewuchses beschädigt bzw. zerstört wird. Beispielsweise können oberirdische Blätter und/oder Blüten des pflanzlichen Bewuchses durch das Wirkmittel zertrennt und/oder zerkleinert werden und die Verbindung zum unterirdischen Teil des pflanzlichen Bewuchses getrennt werden. Mit anderen Worten, durch das Abgeben des Wirkmittels entfaltet das Wirkmittel eine Schnittwirkung an dem pflanzlichen Bewuchs, wodurch der pflanzliche Bewuchs zerstört wird. Vorteilhafterweise kann das Wirkmittel ferner derart abgegeben werden, dass das Wirkmittel auch in dem unterirdischen Teil des pflanzlichen Bewuchses, beispielsweise in Wurzeln, Zwiebeln, und/oder Knollen eindringt. So kann beispielsweise durch eine Beschädigung und/oder Zerstörung der Wurzeln, Zwiebeln, und/oder Knollen des pflanzlichen Bewuchses erreicht werden, dass die Wurzeln, Zwiebeln und/oder Knollen einem biologischen Zersetzungsprozess ausgesetzt werden, welcher zu einem Absterben des pflanzlichen Bewuchses führt bzw. ein Nachwachsen verhindert. Ferner kann vorgesehen werden, dass die Bewegung der Wirkmittelabgabeeinheit im Wesentlichen horizontal erfolgt bzw. im Wesentlichen parallel zur landwirtschaftlichen Fläche erfolgt. Des Weiteren kann die Abgabe des Wirkmittels während des Bewegen-Schritt der Wirkmittelabgabeeinheit über den Boden erfolgen.

Im Rahmen der vorliegenden Offenbarung wird unter dem Begriff "Boden" eine Fläche verstanden, welche zumindest teilweise einen pflanzlichen Bewuchs aufweist, bspw. eine landwirtschaftliche Fläche, Parkfläche, Golfanlage, Bahn- oder Straßentrasse. Ferner wird unter "landwirtschaftliche Fläche" ein Feld oder eine Anbaufläche für Pflanzen oder auch eine Parzelle einer solchen Anbaufläche verstanden. Die landwirtschaftliche Fläche kann somit eine Ackerfläche, ein Grünland oder eine Weide sein. Die Pflanzen können beispielsweise Nutzpflanzen, deren Frucht landwirtschaftlich genutzt wird, beispielsweise als Nahrungsmittel, Futtermittel oder als Energiepflanze, sein. Ferner kann die landwirtschaftliche Fläche auch unerwünschte Pflanzen, wie Beikräuter, Unkräuter und Ungräser umfassen. Der erste Pflanzentyp kann dabei insbesondere unerwünschte Pflanzen betreffen, welche durch das offenbarte Verfahren bekämpft werden können. Sowohl die Pflanzen als auch unerwünschten Pflanzen können Teil der landwirtschaftlichen Fläche sein.

Des Weiteren wird unter dem Begriff "begrenzter Wirkungsbereich" verstanden, dass der Wirkungsbereich im Vergleich zum Boden bzw. der landwirtschaftlichen Fläche um ein Vielfaches kleiner ist. Vorzugsweise weist der begrenzte Wirkungsbereich eine Breite von ungefähr 5 cm bis 50 cm, bevorzugt von 10 bis 40 cm, und besonders bevorzugt von 10 cm bis 30 cm quer zur Bewegungsrichtung auf. Die Länge des Wirkungsbereichs in Bewegungsrichtung wird unter anderem von der Dauer der Aktivierung der Wirkmittelabgabeeinheit und der Bewegungsgeschwindigkeit, mit der die Wirkmittelabgabeeinheit in Bewegungsrichtung bewegt wird, bestimmt. Demnach kann durch eine entsprechend lange Aktivierung der Wirkmittelabgabeeinheit eine flächige Behandlung des Bodens erfolgen. Vorzugsweise ist die Bewegungsgeschwindigkeit der Wirkmittelabgabeeinheit relativ zu dem Boden in Bewegungsrichtung größer als 0 km/h. Besonders bevorzugt beträgt die Bewegungsgeschwindigkeit in Bewegungsrichtung ca. 0,5 km/h bis 20 km/h, bevorzugt 2 km/h bis 10km/h, und besonders bevorzugt 3 km/h bis 6 km/h.

Vorteilhafterweise kann durch den begrenzten Wirkungsbereich der erste Pflanzentyp bzw. unerwünschte Pflanzentyp gezielt bekämpft werden und größere Beschädigungen an erwünschten Pflanzen des Bodens bzw. der landwirtschaftlichen Fläche verhindert bzw. minimiert werden.

Das Verfahren sieht vor, dass das Wirkmittel derart durch die Wirkmittelabgabeeinheit abgegeben wird, dass der durch das Wirkmittel auf dem Boden verursachte Druck mindestens 50 N/cm², bevorzugt mindestens 100 N/cm² und besonders bevorzugt mindestens 200 N/cm² beträgt. Für den zuvor genannten Wert wird angenommen, dass das Wirkmittel ungehindert von der Wirkmittelabgabeeinheit auf den Boden abgegeben wird. Mit anderen Worten, es befinden sich keine Hindernisse zwischen der Wirkmittelabgabeeinheit und dem Boden auf die das Wirkmittel treffen könnte, so dass das Wirkmittel direkt auf den Boden trifft. Vorteilhafterweise kann bei diesem Druck eine ausreichende Beschädigung des von dem Wirkmittel erfassten pflanzlichen Bewuchs sichergestellt werden. Der zuvor angegebene Druckwert wurde ermittelt, indem unter eine Wirkmittelabgabeeinheit eine Waage angeordnet wurde, auf welche das Wirkmittel abgegeben wurde. Die Ermittlung wurde ferner unter den Ausschluss von Seitenwinden vorgenommen.

Bevorzugt beträgt der Druck mindestens 310 N/cm², um damit bei diesem Druck zusätzlich zur überirdischen Bekämpfung des pflanzlichen Bewuchses auch eine zuverlässige unterirdische Bekämpfung des pflanzlichen Bewuchses zu erwirken. Insbesondere können Wurzeln oder Zwiebeln des pflanzlichen Bewuchses zumindest teilweise zerstört werden.

Vorteilhafterweise ermöglichen die vorgeschlagenen Drücke eine ausreichende Zerstörung/Zerkleinerung des pflanzlichen Bewuchses, um eine zügige Verrottung bzw. Zersetzung und nachhaltige Bekämpfung des ersten Pflanzentyps zu ermöglichen. So haben sich die angegebenen Werte insbesondere für die Bekämpfung der Herbstzeitlosen (Colchicum autumnale) als wirkungsvoll erwiesen. Diese Werte sind allerdings nicht auf die Bekämpfung der Herbstzeitlosen beschränkt und können auch für andere (unerwünschte) Pflanzentypen angewendet werden.

Vorzugsweise beträgt die Dauer der Wirkmittelabgabe auf einen Bereich des pflanzlichen Bewuchses bzw. Bodens weniger als 1 s (Sekunde), bevorzugt weniger als 0,5 s.

Die Wirkmittelabgabeeinheit ist bevorzugt Teil einer landwirtschaftlichen Wirkmittelabgabevorrichtung, wie beispielsweise einer Spritz- bzw. Sprühvorrichtung. Die Wirkmittelabgabeeinheit bzw. Wirkmittelabgabevorrichtung kann insbesondere auf oder an einer mobilen Einheit anordenbar und/oder angeordnet sein. Die mobile Einheit kann als Landfahrzeug oder Luftfahrzeug und/oder Anhänger und/oder Anbau/Aufbaugerät ausgebildet sein. Die mobile Einheit kann insbesondere eine landwirtschaftliche Arbeitsmaschine, bspw. eine Zugmaschine, ein Schlepper, eine selbstfahrende bzw. autonome Feldspritze oder ein selbstfahrender bzw. autonomer Roboter sein. Die Wirkmittelabgabeeinheit bzw. Wirkmittelabgabevorrichtung kann auch an einer hydraulischen Vorrichtung der landwirtschaftlichen Arbeitsmaschine angebaut sein. Denkbar ist auch, dass die Wirkmittelabgabeeinheit bzw. Wirkmittelabgabevorrichtung auf einer Ladefläche der landwirtschaftlichen Arbeitsmaschine aufgebaut ist. Alternativ kann die Wirkmittelabgabeeinheit bzw. Wirkmittelabgabevorrichtung an der landwirtschaftlichen Arbeitsmaschine angehängt sein.

Vorzugsweise weist die Wirkmittelabgabeeinheit eine Öffnung bzw. Düse auf, durch welche das Wirkmittel abgegeben wird. Des Weiteren kann die Wirkmittelabgabeeinheit eine Freigabeeinheit, beispielsweise ein pneumatisch oder elektrisches bzw. elektro-mechanisches Ventil, aufweisen, welches bei einer Aktivierung ein Austreten bzw. Abgeben des Wirkmittels durch die Wirkmittelabgabeeinheit bzw. Öffnung/Düse ermöglicht. Insbesondere können die elektrischen Ventile einen Vorsteuer(schalt)kreis aktivieren, um eine hydraulische oder pneumatische Aktivierung des Ventils zu ermöglichen. Ferner kann der Wirkmittelabgabeeinheit ein Wirkmittelbehältnis zugeordnet sein, in dem das Wirkmittel zur Verfügung gestellt wird. Ferner kann das Wirkmittel mittels einer Pumpe dem Wirkmittelbehältnis entnommen werden und der Wirkmittelabgabeeinheit zugeführt werden. Insbesondere kann die Pumpe derart ausgebildet sein, dass das Wirkmittel mit einem Druck von ca. 150 bar bis 1200 bar über die Wirkmittelabgabeeinheit abgegeben wird.

Vorteilhafterweise ermöglicht das Aktivieren oder Deaktivieren der Wirkmittelabgabeeinheit, wenn die augenblickliche Position der Wirkmittelabgabeeinheit im Wesentlichen der Ortsinformation des ersten Pflanzentyps entspricht, dass der erste Pflanzentyp gezielt bekämpft oder ausgespart wird und das Wirkmittel entsprechend sparsam eingesetzt wird. Als Ortsinformation können dabei insbesondere eine geographische Ortsangabe oder eine geographische Bereichs- bzw. Flächenangabe verstanden werden. Insbesondere kann die Wirkmittelabgabeeinheit derart gesteuert, dass beim Bewegen der Wirkmittelabgabeeinheit über den Boden bzw. die landwirtschaftliche Fläche die Wirkmittelabgabeeinheit aktiviert oder deaktiviert wird, sobald die Ortsinformation in den Wirkungsbereich der Wirkmittelabgabeeinheit gelangt. Ferner kann vorgesehen sein, dass die Wirkmittelabgabeeinheit deaktiviert oder aktiviert wird, sobald die entsprechende Ortsinformation den Wirkungsbereich verlässt. Mit anderen Worten, es kann vorgesehen sein, dass die Wirkmittelabgabeeinheit aktiviert oder deaktiviert ist, solange sich der Wirkungsbereich und die Ortsinformation aus einer Vogelperspektive auf die landwirtschaftliche Fläche überlappen.

Ferner kann das Verfahren vorsehen, dass die Ortsinformation des auf dem Boden bzw. der landwirtschaftlichen Fläche auftretenden ersten Pflanzentyps vorab erstellt wird. So können beispielsweise ein oder mehrere geographische Koordinaten entsprechend den Ortsinformationen des ersten Pflanzentyps bereitgestellt werden. Vorzugsweise wird die Ortsinformation anhand einer Karte, beispielsweise einer vektorbasierten oder rasterbasierten Karte bereitgestellt, welche die Ortsinformation in Form geografischer Koordinaten und/oder Bereiche enthält. Ferner kann vorgesehen sein, dass die Ortsinformationen anhand einer optischen Auswertung des Bodens bzw. der landwirtschaftlichen Fläche bereitgestellt werden. So kann beispielsweise der Boden bzw. die landwirtschaftliche Fläche aus der Luft optisch erfasst werden, um eine oder mehrere Bildaufnahmen des Bodens bzw. der landwirtschaftlichen Fläche zu erstellen. Die eine oder mehrere Bildaufnahmen können computergestützt ausgewertet werden, beispielsweise mittels eines geeignet trainierten künstlichen Intelligenz (KI) Modells, welches den ersten Pflanzentyp in den einen oder mehreren Bildaufnahmen erkennt und entsprechende Ortsinformationen bereitstellt. Diese Karten können beispielsweise eine Genauigkeit von wenigen Zentimetern, beispielsweise 1 cm bis 2 cm aufweisen. Beim Bewegen der Wirkmittelabgabeeinheit kann die augenblickliche Position der Wirkmittelabgabeeinheit, vorzugsweise mittels einer Positionsbestimmungseinheit, beispielsweise mittels einem satellitengestützten Navigationssystem wie GPS, GLONASS oder Galileo, bevorzugt kontinuierlich mit der Ortsinformation abgeglichen werden, um die Wirkmittelabgabeeinheit entsprechend der Ortsinformation zu aktivieren bzw. zu deaktivieren.

Alternativ kann das Verfahren vorsehen, dass beim Bewegen der Wirkmittelabgabeeinheit entlang der Bewegungsrichtung, eine Bilderfassungseinheit den in Bewegungsrichtung liegenden Bereich des Bodens bzw. der landwirtschaftlichen Fläche zumindest abschnittsweise erfasst und in den erfassten Daten der erste Pflanzentyp mit entsprechenden Ortsinformationen identifiziert wird. Diese Ortsinformation kann ferner in Bezug auf die augenblickliche Position der Wirkmittelabgabeeinheit abgeglichen werden, so dass während der Dauer des Überfahrens des entsprechenden pflanzlichen Bewuchses mit dem Wirkungsbereich der Wirkmittelabgabeeinheit, die Wirkmittelabgabeeinheit aktiviert oder deaktiviert ist.

Vorzugsweise können beide Ansätze miteinander kombiniert werden. Somit kann vorteilhafterweise ein Abgleich der mittels der Bilderfassungseinheit bestimmten Ortsinformation mit den zuvor bereitgestellten Ortsinformationen erfolgen.

Ferner kann die Ortsinformation auch mehr als einen Pflanzentyp (den ersten Pflanzentyp) betreffen. Insbesondere können die Ortsinformationen mehrere verschiedene Pflanzentypen, welche bekämpft oder nicht bekämpft werden sollen, betreffen. Vorzugsweise kann in der ersten Alternative, für jeden Pflanzentyp ein unterschiedlicher Parameter festgelegt werden, mit denen das Wirkmittel entsprechend des Pflanzentyps abgegeben wird. Vorteilhafterweise kann somit eine individuelle Bekämpfung von verschiedenen Pflanzentypen erfolgen. Ferner können den Ortsinformationen unterschiedliche Parameter zugewiesen werden, mit denen das Wirkmittel abgegeben wird. So kann beispielsweise in Abhängigkeit der Größe des pflanzlichen Bewuchses, die Abgabe des Wirkmittels kräftiger oder schwächer eingestellt werden.

Vorzugsweise sieht das Verfahren vor, dass das Wirkmittel als gerichteter Flüssigkeitsstrahl in Richtung des Bodens bzw. der landwirtschaftlichen Fläche abgegeben wird. Dabei kann der Flüssigkeitsstrahl hauptsächlich eine Flüssigkeit aber auch feste Bestandteile, beispielsweise Feststoffpartikel, aufweisen, wodurch eine zusätzliche abrasive Wirkung erzeugt werden kann.

Insbesondere bei den zuvor genannten Druckangaben von mindestens 50 N/cm², bevorzugt von mindestens 100 N/cm², besonders bevorzugt von 200 N/cm² und insbesondere von mindestens 310 N/cm², die durch den Flüssigkeitsstrahl ausgeübt werden, kann der oberirdische Teil (oberhalb des Bodens bzw. der landwirtschaftlichen Fläche) des pflanzlichen Bewuchses beschädigt bzw. zerstört werden. Beispielsweise können oberirdische Blätter und/oder Blüten des pflanzlichen Bewuchses durch den Flüssigkeitsstrahl zertrennt und/oder zerkleinert werden und die Verbindung zum unterirdischen Teil des pflanzlichen Bewuchses getrennt werden. Mit anderen Worten, der Flüssigkeitsstrahls entfaltet eine Schnitt- bzw. Schneidwirkung an dem pflanzlichen Bewuchs, wodurch der pflanzliche Bewuchs zerstört wird. Vorteilhafterweise kann der Flüssigkeitsstrahl auch in den unterirdischen Teil des pflanzlichen Bewuchses, beispielsweise in Wurzeln, Zwiebeln, und/oder Knollen eindringen. Durch eine Beschädigung und/oder Zerstörung der Wurzeln, Zwiebeln, und/oder Knollen des pflanzlichen Bewuchses können die Wurzeln, Zwiebeln und/oder Knollen einem biologischen Zersetzungsprozess ausgesetzt werden, welcher zu einem Absterben des pflanzlichen Bewuchses führt bzw. dessen Nachwachsen verhindert.

Vorzugsweise kann das Wirkmittel bzw. der Flüssigkeitsstrahl für die Dauer, die die Wirkmittelabgabeeinheit aktiviert ist, kontinuierlich abgegeben werden. Unter "kontinuierlich" wird dabei verstanden, dass der Flüssigkeitsstrahl, gesehen auf einen ebenen Boden, eine zusammenhängende Fläche entlangfährt. Dazu kann das Wirkmittel bzw. der Flüssigkeitsstrahl für die Dauer, die die Wirkmittelabgabeeinheit aktiviert ist, ununterbrochen abgegeben werden. Alternativ kann das Wirkmittel bzw. der Flüssigkeitsstrahl mit Unterbrechungen abgegeben werden, wobei die auf den Boden erzeugten Aufprallflächen des Wirkmittels bzw. des Flüssigkeitsstrahls von jeweils zwei aufeinanderfolgenden Wirkmittel- bzw. Flüssigkeitsstrahlabgaben sich zumindest teilweise überlappen, um die zusammenhängende Fläche zu erzeugen bzw. entlangzufahren. Mit anderen Worten, bei einer Abgabe des Flüssigkeitsstrahls mit Unterbrechungen sind die Aufprallflächen des Wirkmittels bzw. des Flüssigkeitsstrahls von jeweils zwei aufeinanderfolgenden Wirkmittel- bzw. Flüssigkeitsstrahlabgaben nicht voneinander beabstandet.

Des Weiteren kann die Dauer, die die Wirkmittelabgabeeinheit aktiviert ist, in Abhängigkeit von der Dauer des Überfahrens des ersten Pflanzentyps mit dem Wirkungsbereich der Wirkmittelabgabeeinheit gesteuert werden. Mit anderen Worten, die Wirkmittelabgabeeinheit kann deaktiviert werden, sobald sich im Wirkungsbereich der Wirkmittelabgabeeinheit kein pflanzlicher Bewuchs des ersten Pflanzentyps befindet. Vorteilhafterweise kann ein Pufferfenster vorgesehen werden, nach dessen Ablauf die Wirkmittelabgabeeinheit erst deaktiviert wird. Das Pufferfenster kann festlegen, dass eine Mindestüberfahrstrecke, in der sich kein pflanzlicher Bewuchs des ersten Pflanzentyps im Wirkungsbereich der Wirkmittelabgabeeinheit befindet, zurückgelegt werden muss, bevor eine Deaktivierung der Wirkmittelabgabeeinheit erfolgt.

Für die erste Alternative ist vorgesehen, dass das Wirkmittel bzw. der Flüssigkeitsstrahl für mindestens 100 Millisekunden (ms), bevorzugt für mindestens 120 ms abgegeben wird bzw. die zuvor aktivierte Wirkmittelabgabeeinheit erst nach mindestens 100 ms, bevorzugt nach mindestens 120 ms deaktiviert wird. Vorteilhafterweise kann durch eine Mindestaktivierungsdauer der Wirkmittelabgabeeinheit und des gleichzeitigen Bewegens der Wirkmittelabgabeeinheit über den Boden eine Fräs- und/oder Schneidwirkung durch das abgegebene Wirkmittel, insbesondere den Flüssigkeitsstrahl, auf den pflanzlichen Bewuchs erreicht werden. In Abhängigkeit der Bewegungsgeschwindigkeit der Wirkmitteabgabeeinheit in Bewegungsrichtung (siehe oben) ergeben sich somit entsprechende Mindestflächen, auf die das Wirkmittel, insbesondere der Flüssigkeitsstrahl abgegeben wird.

Vorzugsweise weist das Wirkmittel hauptsächlich Wasser auf. Ferner kann vorgesehen sein, dass das Wirkmittel keine chemischen Pflanzenvernichtungsmittel und/oder nicht biologischen Pflanzenvernichtungsmittel enthält. Mit anderen Worten, als Wirkmittel kommt hauptsächlich, bevorzugt ausschließlich, Wasser, beispielsweise Leitungswasser oder Regenwasser zum Einsatz. Dies hat den Vorteil, dass auf ein allgemein verfügbares Wirkmittel zurückgegriffen werden kann und was darüber hinaus eine gute Vereinbarkeit mit biologischer Landwirtschaft aufweist.

Vorzugsweise wird das Wirkmittel, insbesondere die Flüssigkeit vor dem Abgeben nicht (aktiv) erhitzt. D.h., die Temperatur des Wirkmittels entspricht im Wesentlichen der Temperatur am Abgabeort. Insbesondere beträgt die Temperatur des Wirkmittels weniger als 60°C, bevorzugt weniger als 50°C, und besonders bevorzugt weniger als 45°C. Vorteilhafterweise kann somit auf eine energieintensive Erhitzung des Wirkmittels verzichtet werden.

Ferner können als Alternativen zu Wasser, auch Flüssigkeiten zum Einsatz gelangen, gegenüber denen der erste Pflanzentyp Unverträglichkeiten aufweist, beispielsweise Pflanzenöle oder Harnstofflösungen. Insbesondere weist die Herbstzeitlose eine Stickstoffunverträglichkeit auf, so dass eine Harnstofflösung als Wirkmittel die Wirksamkeit der Bekämpfung erhöht.

Es sind aber auch alternative Wirkmittel denkbar, welche beispielsweise Trockeneisgranulat umfassen.

Gemäß der Erfindung ist der Flüssigkeitsstrahl punktförmig.

Dabei bezieht sich die Form des Flüssigkeitsstrahls auf den Umriss des Flüssigkeitsstrahls, wie er auf einer als idealen Ebene verlaufenden landwirtschaftlichen Fläche gebildet wird, wenn die Bewegungsgeschwindigkeit der Wirkmittelabgabeeinheit im Wesentlichen 0 km/h beträgt. Unter im Wesentlichen punktförmig wird dabei verstanden, dass der Umriss auch eine leicht ovale Form aufweisen kann. Vorteilhafterweise kann durch die gewählten Flüssigkeitsstrahlformen, das Wirkmittel bzw. die Flüssigkeit auf einen Bereich konzentriert bzw. fokussiert werden.

Die Wirkmittelabgabeeinheit ist derart ausgebildet, um den Flüssigkeitsstrahl einer zur Bewegungsrichtung zusätzlich überlagerten Bewegung auszusetzen.

Vorteilhafterweise kann der punktförmige Strahl bzw. Flüssigkeitsstrahl eine im Wesentlichen punktförmige Aufprallfläche auf der landwirtschaftlichen Fläche von ungefähr 0,01 cm² bis 3 cm², bevorzugt von ungefähr 0,05 cm² bis 2 cm² und besonders bevorzugt von ungefähr 0,1 cm² bis 1 cm² aufweisen, wobei der punktförmige Flüssigkeitsstrahl bevorzugt einer rotierenden Bewegung ausgesetzt ist, so dass die Aufprallfläche des Flüssigkeitsstrahls auf der landwirtschaftlichen Fläche eine im Wesentlichen kreisförmige Bahn beschreibt (unter der Annahme, dass die landwirtschaftliche Fläche als im Wesentlichen horizontal verlaufende Ebene betrachtet wird). Der Durchmesser der kreisförmigen Bahn bestimmt dabei im Wesentlichen den Wirkungsbereich quer zur Bewegungsrichtung. Vorzugsweise ist die Rotation des punktförmigen Flüssigkeitsstrahls derart an die Bewegungsgeschwindigkeit der Wirkmittelabgabeeinheit angepasst, dass eine flächige Bearbeitung des Bodens erfolgt. Die Düse bzw. Öffnung der Wirkmittelabgabeeinheit kann einen Durchmesser von ungefähr 1,15 mm aufweisen, um den punktförmigen Flüssigkeitsstrahl zu erzeugen.

Vorzugsweise erzeugt der linienförmige Strahl bzw. Flüssigkeitsstrahl eine quer zur Bewegungsrichtung schmal verlaufende Aufprallfläche, deren Breite in Bewegungsrichtung zwischen 0,3 cm und 1 cm liegt. Mit anderen Worten, die Längsrichtung der Aufprallfläche verläuft im Wesentlichen quer zur Bewegungsrichtung. Die Länge der Aufprallfläche kann dabei im Wesentlichen der Breite/Länge des Wirkungsbereichs quer zur Bewegungsrichtung entsprechen. Unter der Annahme, dass der Strahl auf eine flache Ebene trifft, welche dem Boden entspricht, kann die Aufprallfläche als eine im Wesentlichen reckeckförmige Aufprallfläche angesehen werden. Alternativ kann die Längsrichtung der Aufprallfläche parallel zur Bewegungsrichtung verlaufen und der Flüssigkeitsstrahl wird quer zur Bewegungsrichtung im Bereich des Wirkungsbereichs hin und her bewegt.

Ferner kann der flächenförmige Flüssigkeitsstrahl eine Aufprallfläche mit einer Breite in Bewegungsrichtung von circa 1 cm bis 5 cm aufweisen. Die Länge der Aufprallfläche kann dabei im Wesentlichen der Breite/Länge des Wirkungsbereichs quer zur Bewegungsrichtung entsprechen. Unter der Annahme, dass der Strahl auf eine flache Ebene trifft, welche dem Boden entspricht, kann die Aufprallfläche als eine im Wesentlichen reckeckförmige Aufprallfläche angesehen werden.

Vorzugsweise kann das Verfahren vorsehen, dass das Wirkmittel an der Wirkmittelabgabeeinheit mit einer Geschwindigkeit von ungefähr 100 m/s bis 350 m/s, bevorzugt von ungefähr 150 m/s bis 300 m/s, und besonders bevorzugt von ungefähr 200 m/s bis 250 m/s austritt.

Das Verfahren sieht vor, dass das Wirkmittel durch die Wirkmittelabgabeeinheit mit ungefähr 5 l/min bis 20 l/min, bevorzugt mit ungefähr 12 l/min bis 17 l/min, und besonders bevorzugt mit ungefähr 13 l/min bis 15 l/min abgegeben wird.

Vorteilhafterweise ermöglicht die Verwendung eines Flüssigkeitsstrahl, dass von dem pflanzlichen Bewuchs abgetrennte und/oder zerkleinerte Pflanzenreste durch die Flüssigkeit weitertransportiert bzw. weggespült werden. Folglich kann eine Kontamination geernteter Nutzpflanzen durch verbleibende Rückstände von unerwünschten Pflanzen reduziert werden. Insbesondere konnte beobachtet werden, dass bei einer Abgabe von mindestens 0,16 Liter/m² (l/m²) Flüssigkeit, bevorzugt von mindestens 0,25 l/m², besonders bevorzugt 0,4 l/m², insbesondere von 0,45 l/m², gesehen auf die während der Aktivierung der Wirkmittelabgabeeinheit behandelte Fläche, eine zufriedenstellende Transport- und/oder Spülwirkung erreicht wurde.

Vorzugsweise kann das Verfahren vorsehen, dass das Wirkmittel von der Wirkmittelabgabeeinheit in einer Abgabehöhe in Bezug auf den Boden bzw. die landwirtschaftliche Fläche abgegeben wird, wobei die Abgabehöhe ungefähr 10 cm bis 50 cm, bevorzugt ungefähr 15 cm bis 35 cm, und besonders bevorzugt ungefähr 20 cm bis 30 cm beträgt.

Mit anderen Worten, die Düse bzw. Öffnung an der das Wirkmittel an der Wirkmittelabgabeeinheit austritt, ist ungefähr 10 cm bis 50 cm, bevorzugt ungefähr 15 cm bis 35 cm, und besonders bevorzugt ungefähr 20 cm bis 30 cm über der landwirtschaftlichen Fläche angeordnet.

Vorzugsweise kann das Verfahren weiter folgenden Schritt aufweisen, Einstellen der Abgabehöhe, bevorzugt vor dem Bewegen-Schritt, und wobei vorzugsweise während des Bewegen-Schritt die Abgabehöhe im Wesentlichen beibehalten wird.

Vorteilhafterweise können durch Beibehalten der Abgabehöhe Bodenunebenheiten der landwirtschaftlichen Fläche ausgeglichen werden, um ein gleichbleibendes Bekämpfungsergebnis des pflanzlichen Bewuchses zu ermöglichen.

Vorzugsweise kann das Verfahren vorsehen, dass eine Vielzahl von individuellen Wirkmittelabgabeeinheiten genutzt werden, welche überlappende Wirkungsbereiche aufweisen. Vorteilhafterweise kann der Gesamtwirkungsbereich durch die Verwendung einer Vielzahl von Wirkmittelabgabeeinheiten erhöht werden. Vorzugsweise können die Vielzahl von Wirkmittelabgabeeinheiten quer zur Bewegungsrichtung nebeneinander angeordnet sein. Insbesondere können die Vielzahl von Wirkmittelabgabeeinheiten quer zur Bewegungsrichtung auf einer Höhe angeordnet sein.

Vorteilhafterweise kann die Abgabehöhe für jede einzelne Wirkmittelabgabeeinheit individuell einstellbar sein und die Abgabehöhe jeder Wirkmittelabgabeeinheit während des Bewegen-Schritt im Wesentlichen beibehalten werden, bevorzugt unabhängig von den anderen Wirkmittelabgabeeinheiten. Vorzugsweise können pro Meter Arbeitsbreite quer zur Bewegungsrichtung mehr als eine und/oder maximal 20 Wirkmittelabgabeeinheiten genutzt werden. Ferner kann eine Arbeitsbreite von mindestens einem Meter vorgesehen sein. Des Weiteren kann die Arbeitsbreite bevorzugt maximal 12 m betragen. Allerdings ist die Erfindung nicht auf diese Arbeitsbreite beschränkt und es können auch größere Arbeitsbreiten vorgesehen sein.

Ein weiterer Aspekt der Erfindung betrifft eine Vorrichtung zur gezielten Abgabe eines Wirkmittels auf einen Boden bzw. Erdboden, insbesondere auf eine landwirtschaftliche (Nutz-) Fläche, aufweisend:
eine Wirkmittelabgabeeinheit, welche dazu ausgelegt ist, entlang einer Bewegungsrichtung über den Boden bewegt zu werden, wobei die Wirkmittelabgabeeinheit aktivierbar ist und durch Aktivieren der Wirkmittelabgabeeinheit eine Abgabe des Wirkmittels in einem begrenzten Wirkungsbereich auf den Boden erfolgt, und
wobei die Wirkmittelabgabeeinheit derart ausgebildet ist, dass durch Abgabe des Wirkmittels eine mechanische Beschädigung von innerhalb des Wirkungsbereichs befindlichen pflanzlichem Bewuchs erfolgt.

Vorteilhafterweise ermöglicht die erfindungsgemäße Vorrichtung, dass unerwünschter pflanzlicher Bewuchs, welcher dem ersten Pflanzentyp entspricht und auf dem Boden bzw. der landwirtschaftlichen Fläche vorhanden ist, selektiv und gezielt durch eine durch das Wirkmittel verursachte physikalische, insbesondere mechanische, Krafteinwirkung bekämpft werden kann. Somit kann die Bekämpfung von unerwünschten Pflanzentypen vorzugsweise ohne chemische Verfahren, beispielsweise ohne den Einsatz von chemischen Pflanzenvernichtungsmitteln, oder durch einen reduzierten Einsatz von chemischen Pflanzenvernichtungsmitteln erfolgen.

Insbesondere kann vorgesehen sein, dass das Wirkmittel durch die Wirkmittelabgabeeinheit derart abgegeben wird, dass der oberirdische Teil (oberhalb des Bodens bzw. der landwirtschaftlichen Fläche) des pflanzlichen Bewuchses beschädigt bzw. zerstört wird. Beispielsweise können oberirdische Blätter und/oder Blüten des pflanzlichen Bewuchses durch das Wirkmittel zertrennt und/oder zerkleinert werden und die Verbindung zum unterirdischen Teil des pflanzlichen Bewuchses getrennt werden. Mit anderen Worten, durch das Abgeben des Wirkmittels entfaltet das Wirkmittel eine Schnittwirkung an dem pflanzlichen Bewuchs, wodurch der pflanzliche Bewuchs zerstört wird. Vorteilhafterweise kann das Wirkmittel ferner derart abgegeben wird, dass das Wirkmittel auch in dem unterirdischen Teil des pflanzlichen Bewuchses, beispielsweise in Wurzeln, Zwiebeln, und/oder Knollen, eindringt. So kann beispielsweise durch eine Beschädigung und/oder Zerstörung der Wurzeln, Zwiebeln, und/oder Knollen des pflanzlichen Bewuchses erreicht werden, dass die Wurzeln, Zwiebeln und/oder Knollen einem biologischen Zersetzungsprozess ausgesetzt werden, welcher zu einem Absterben des pflanzlichen Bewuchses führt bzw. ein Nachwachsen verhindert. Ferner kann vorgesehen werden, dass die Bewegung der Wirkmittelabgabeeinheit im Wesentlichen horizontal und/oder parallel gegenüber der landwirtschaftlichen Fläche erfolgt.

Vorzugsweise weist der begrenzte Wirkungsbereich eine Breite von ungefähr 5 cm bis 50 cm, bevorzugt von 10 bis 40 cm, und besonders bevorzugt von 10 cm bis 30 cm quer zur Bewegungsrichtung auf. Die Länge des Wirkungsbereichs in Bewegungsrichtung wird dahingegen von der Dauer der Aktivierung der Wirkmittelabgabeeinheit und der Bewegungsgeschwindigkeit, mit der die Wirkmittelabgabeeinheit in Bewegungsrichtung bewegt wird, bestimmt. Vorzugsweise ist die Bewegungsgeschwindigkeit der Wirkmittelabgabeeinheit relativ zu dem Boden in Bewegungsrichtung größer als 0 km/h. Vorzugsweise beträgt die Bewegungsgeschwindigkeit in Bewegungsrichtung ca. 0,5 km/h bis 20 km/h, bevorzugt 2 km/h bis 10km/h, und besonders bevorzugt 3 km/h bis 6 km/h.

Vorteilhafterweise kann durch den begrenzten Wirkungsbereich der erste Pflanzentyp gezielt bekämpft werden und größere Beschädigungen an erwünschten Pflanzen der landwirtschaftlichen Fläche verhindert bzw. minimiert werden.

Das Wirkmittel wird derart durch die Wirkmittelabgabeeinheit abgegeben, dass der durch das Wirkmittel auf dem Boden verursachte Druck mindestens 50 N/cm², bevorzugt mindestens 100 N/cm² und besonders bevorzugt mindestens 200 N/cm² beträgt. Für den zuvor genannten Wert wird angenommen, dass das Wirkmittel ungehindert von der Wirkmittelabgabeeinheit auf den Boden abgegeben wird. Mit anderen Worten, es befinden sich keine Hindernisse zwischen der Wirkmittelabgabeeinheit und dem Boden auf die das Wirkmittel treffen könnte, so dass das Wirkmittel direkt auf den Boden trifft. Vorteilhafterweise kann bei diesem Druck eine ausreichende Beschädigung des von dem Wirkmittel erfassten pflanzlichen Bewuchs sichergestellt werden. Der zuvor angegebene Druckwert wurde ermittelt, indem unter eine Wirkmittelabgabeeinheit eine Waage angeordnet wurde, auf welche das Wirkmittel abgegeben wurde. Dier Ermittlung wurde ferner unter den Ausschluss von Seitenwinden vorgenommen.

Bevorzugt beträgt der Druck mindestens 310 N/cm². Vorteilhafterweise kann bei diesem Druck zusätzlich zur überirdischen Bekämpfung des pflanzlichen Bewuchses auch eine zuverlässige unterirdische Bekämpfung des pflanzlichen Bewuchses erfolgen. Insbesondere könne Wurzeln oder Zwiebeln des pflanzlichen Bewuchses zumindest teilweise zerstört werden.

Vorteilhafterweise ermöglichen die vorgeschlagenen Drücke eine ausreichende Zerstörung/Zerkleinerung des pflanzlichen Bewuchses, um eine zügige Verrottung bzw. Zersetzung und nachhaltige Bekämpfung des ersten Pflanzentyps zu ermöglichen. So haben sich die angegebenen Werte insbesondere für die Bekämpfung der Herbstzeitlosen (Colchicum autumnale) als wirkungsvoll erwiesen. Diese Werte sind allerdings nicht auf die Bekämpfung der Herbstzeitlosen beschränkt und können auch für andere (unerwünschte) Pflanzentypen angewendet werden.

Vorzugsweise beträgt die Dauer der Wirkmittelabgabe auf einen Bereich des pflanzlichen Bewuchses bzw. Bodens weniger als 1 s (Sekunde), bevorzugt weniger als 0,5 s.

Die erfindungsgemäße Vorrichtung bzw. die Wirkmittelabgabeeinheit ist bevorzugt Teil einer landwirtschaftlichen Wirkmittelabgabevorrichtung, wie beispielsweise einer Spritz- bzw. Sprühvorrichtung. Die erfindungsgemäße Vorrichtung bzw. Wirkmittelabgabeeinheit kann insbesondere auf oder an einer mobilen Einheit anordenbar und/oder angeordnet sein. Die mobile Einheit kann als Landfahrzeug oder Luftfahrzeug und/oder Anhänger und/oder Anbau/Aufbaugerät ausgebildet sein. Die mobile Einheit kann insbesondere eine landwirtschaftliche Arbeitsmaschine, bspw. eine Zugmaschine, ein Schlepper, eine selbstfahrende bzw. autonome Feldspritze oder ein selbstfahrender bzw. autonomer Roboter sein. Die Wirkmittelabgabeeinheit bzw. Wirkmittelabgabevorrichtung kann auch an einer hydraulischen Vorrichtung der landwirtschaftlichen Arbeitsmaschine angebaut sein. Denkbar ist auch, dass die Wirkmittelabgabeeinheit bzw. Wirkmittelabgabevorrichtung auf einer Ladefläche der landwirtschaftlichen Arbeitsmaschine aufgebaut ist. Alternativ kann die Wirkmittelabgabeeinheit bzw. Wirkmittelabgabevorrichtung an der landwirtschaftlichen Arbeitsmaschine angehängt sein.

Vorzugsweise weist die Wirkmittelabgabeeinheit eine Öffnung bzw. Düse auf, durch welche das Wirkmittel abgegeben wird. Des Weiteren kann die Wirkmittelabgabeeinheit eine Freigabeeinheit, beispielsweise ein pneumatisch oder elektrisches bzw. elektro-mechanisches Ventil, aufweisen, welches bei einer Aktivierung ein Austreten bzw. Abgeben des Wirkmittels durch die Wirkmittelabgabeeinheit bzw. Öffnung/Düse ermöglicht. Insbesondere können die elektrischen Ventile einen Vorsteuer(schalt)kreis aktivieren, um eine hydraulische oder pneumatische Aktivierung des (Wirkmittel-)Ventils zu ermöglichen. Ferner kann der Wirkmittelabgabeeinheit ein Wirkmittelbehältnis zugeordnet sein, in dem das Wirkmittel zur Verfügung gestellt wird. Ferner kann das Wirkmittel mittels einer Pumpe dem Wirkmittelbehältnis entnommen werden und der Wirkmittelabgabeeinheit zugeführt werden.

Die Vorrichtung weist eine Kontrolleinheit auf, die dazu ausgelegt ist:
- eine augenblickliche Position der Wirkmittelabgabeeinheit mit einer Ortsinformation eines auf dem Boden bzw. der landwirtschaftlichen Fläche auftretenden ersten Pflanzentyps abzugleichen, und
- die Wirkmittelabgabeeinheit zu aktivieren, wenn die augenblickliche Position der Wirkmittelabgabeeinheit im Wesentlichen der Ortsinformation des ersten Pflanzentyps entspricht oder eine aktivierte Wirkmittelabgabeeinheit zu deaktivieren, wenn die augenblickliche Position der Wirkmittelabgabeeinheit im Wesentlichen der Ortsinformation des ersten Pflanzentyps entspricht. In der ersten Alternative entspricht der erste Pflanzentyp einem unerwünschten Pflanzentyp und in der zweiten Alternative einem erwünschten Pflanzentyp. Dementsprechend gewährleistet die zweite Alternative, dass erwünschte Pflanzen, bspw. Nutzpflanzen, durch das Wirkmittel nicht bekämpft werden und dass das Wirkmittel lediglich auf Abschnitte/Bereiche zwischen erwünschten Pflanzen abgegeben wird.

Vorteilhafterweise ermöglicht das Aktivieren der Wirkmittelabgabeeinheit, wenn die augenblickliche Position der Wirkmittelabgabeeinheit im Wesentlichen der Ortsinformation des ersten Pflanzentyps entspricht, dass der erste Pflanzentyp gezielt bekämpft wird und das Wirkmittel entsprechend sparsam eingesetzt wird. Mit anderen Worten, es erfolgt keine großflächige Abgabe des Wirkmittels. Als Ortsinformation können dabei insbesondere eine geographische Ortsangabe oder eine geographische Bereichs- bzw. Flächenangabe verstanden werden. Insbesondere kann die Wirkmittelabgabeeinheit derart gesteuert, dass beim Bewegen der Wirkmittelabgabeeinheit über den Boden bzw. die landwirtschaftliche Fläche die Wirkmittelabgabeeinheit aktiviert wird, sobald die Ortsinformation in den Wirkungsbereich der Wirkmittelabgabeeinheit gelangt. Ferner kann vorgesehen sein, dass die Wirkmittelabgabeeinheit deaktiviert wird, sobald die entsprechende Ortsinformation den Wirkungsbereich verlässt. Mit anderen Worten, es kann vorgesehen sein, dass die Wirkmittelabgabeeinheit aktiviert ist, solange sich der Wirkungsbereich und die Ortsinformation aus einer Vogelperspektive auf die landwirtschaftliche Fläche blickend überlappen.

Ferner kann vorgesehen sein, dass die Ortsinformation des auf dem Boden bzw. der landwirtschaftlichen Fläche auftretenden ersten Pflanzentyps vorab erstellt wird und anschließend in der Kontrolleinheit gespeichert wird. So können beispielsweise ein oder mehrere geographische Koordinaten entsprechend den Ortsinformationen des ersten Pflanzentyps bereitgestellt werden. Vorzugsweise wird die Ortsinformation anhand einer Karte, beispielsweise einer vektorbasierten oder rasterbasierten Karte bereitgestellt, welche die Ortsinformation in Form geografischer Koordinaten und/oder Bereiche enthält. Ferner kann vorgesehen sein, dass die Ortsinformation/en anhand einer optischen Auswertung des Bodens bzw. der landwirtschaftlichen Fläche bereitgestellt werden. So kann beispielsweise der Boden bzw. die landwirtschaftliche Fläche aus der Luft optisch erfasst werden, um eine oder mehrere Bildaufnahmen der landwirtschaftlichen Fläche zu erstellen. Die eine oder mehrere Bildaufnahmen können computergestützt ausgewertet werden, beispielsweise mittels eines geeignet trainierten künstlichen Intelligenz (KI) Modells, welches den ersten Pflanzentyp in den einen oder mehreren Bildaufnahmen erkennt und entsprechende Ortsinformationen bereitstellt. Diese Karten können beispielsweise eine Genauigkeit von wenigen Zentimetern, beispielsweise 1 cm bis 2 cm, aufweisen. Beim Bewegen der Wirkmittelabgabeeinheit kann die Kontrolleinheit die augenblickliche Position der Wirkmittelabgabeeinheit, vorzugsweise mittels einer Positionsbestimmungseinheit, beispielsweise mittels einem satellitengestützten Navigationssystem wie GPS, GLONASS oder Galileo, bevorzugt kontinuierlich mit der Ortsinformation abgleichen, um die Wirkmittelabgabeeinheit entsprechend der Ortsinformation zu aktivieren bzw. zu deaktivieren.

Alternativ kann das Verfahren vorsehen, dass beim Bewegen der Wirkmittelabgabeeinheit entlang der Bewegungsrichtung, eine Bilderfassungseinheit den in Bewegungsrichtung liegenden Bereich des Bodens bzw. der landwirtschaftlichen Fläche zumindest abschnittsweise erfasst und in den erfassten Daten der erste Pflanzentyp mit entsprechenden Ortsinformationen identifiziert wird. Diese Ortsinformation kann ferner in Bezug auf die augenblickliche Position der Wirkmittelabgabeeinheit abgeglichen werden, so dass während der Dauer des Überfahrens des entsprechenden pflanzlichen Bewuchses mit dem Wirkungsbereich der Wirkmittelabgabeeinheit, die Wirkmittelabgabeeinheit aktiviert ist.

Vorzugsweise können beide Ansätze miteinander kombiniert werden. Somit kann vorteilhafterweise ein Abgleich der mittels der Bilderfassungseinheit bestimmen Ortsinformation mit den zuvor bereitgestellten Ortsinformationen erfolgen.

Ferner kann die Ortsinformation auch mehr als einen Pflanzentyp (den ersten Pflanzentyp) betreffen. Insbesondere können die Ortsinformationen mehrere verschiedene Pflanzentypen, welche bekämpft werden sollen, betreffen. Vorzugsweise kann für jeden Pflanzentyp ein unterschiedlicher Parameter festgelegt werden, mit denen das Wirkmittel entsprechend des Pflanzentyps abgegeben wird. Vorteilhafterweise kann somit eine individuelle Bekämpfung von verschiedenen Pflanzentypen erfolgen. Ferner können den Ortsinformationen unterschiedliche Parameter zugewiesen werden, mit denen das Wirkmittel abgegeben wird. So kann beispielsweise in Abhängigkeit der Größe des pflanzlichen Bewuchses, die Abgabe des Wirkmittels kräftiger oder schwächer eingestellt werden.

Vorzugsweise kann die Wirkmittelabgabeeinheit dazu ausgebildet sein, das Wirkmittel als gerichteten Strahl, insbesondere Flüssigkeitsstrahl, in Richtung des Bodens bzw. der landwirtschaftlichen Fläche abzugeben. Dabei kann der Flüssigkeitsstrahl hauptsächlich eine Flüssigkeit aber auch feste Bestandteile, beispielsweise Feststoffpartikel, aufweisen, wodurch eine zusätzliche abrasive Wirkung erzeugt werden kann.

Vorteilhafterweise kann mittels des gerichteten Strahls, das Wirkmittel gezielt eingesetzt werden. Insbesondere wird das Wirkmittel durch die Wirkmittelabgabeeinheit hauptsächlich vertikal nach unten in Richtung der landwirtschaftlichen Fläche abgegeben.

Vorzugsweise weist das Wirkmittel hauptsächlich Wasser auf. Ferner kann vorgesehen sein, dass das Wirkmittel keine chemischen Pflanzenvernichtungsmittel und/oder nicht biologischen Pflanzenvernichtungsmittel enthält. Mit anderen Worten, als Wirkmittel kommt hauptsächlich, bevorzugt ausschließlich, Wasser, beispielsweise Leitungswasser oder Regenwasser zum Einsatz. Dies hat den Vorteil, dass auf ein allgemein verfügbares Wirkmittel zurückgegriffen werden kann und was darüber hinaus eine gute Vereinbarkeit mit biologischer Landwirtschaft aufweist.

Erfindungsgemäß ist der Flüssigkeitsstrahl punktförmig.

Dabei bezieht sich die Form des Flüssigkeitsstrahls auf den Umriss des Flüssigkeitsstrahls, wie er auf einer als idealen Ebene verlaufenden landwirtschaftlichen Fläche gebildet wird. Unter im Wesentlichen punktförmig wird dabei verstanden, dass der Umriss auch eine leicht ovale Form aufweisen kann. Vorteilhafterweise kann durch die gewählten Flüssigkeitsstrahlformen, die Energie des Flüssigkeitsstrahls auf eine eng begrenzte Fläche konzentriert werden, wodurch hohe Intensitäten möglich sind. Vorteilhafterweise kann die Wirkmittelabgabeeinheit derart ausgebildet sein, um den Flüssigkeitsstrahl einer zur Bewegungsrichtung zusätzlich überlagerten Bewegung aussetzt.

Vorteilhafterweise kann der punktförmige Flüssigkeitsstrahl eine im Wesentlichen punktförmige Aufprallfläche auf der landwirtschaftlichen Fläche von ungefähr 0,01 cm² bis 3 cm², bevorzugt von ungefähr 0,05 cm² bis 2 cm² und besonders bevorzugt von ungefähr 0,1 cm² bis 1 cm² aufweisen, wobei der punktförmige Flüssigkeitsstrahl bevorzugt einer rotierenden Bewegung ausgesetzt ist, so dass die Aufprallfläche des Flüssigkeitsstrahls auf der landwirtschaftlichen Fläche eine im Wesentlichen kreisförmige Bahn beschreibt (unter der Annahme, dass die landwirtschaftliche Fläche als im Wesentlichen horizontal verlaufende Ebene betrachtet wird). Der Durchmesser der kreisförmigen Bahn bestimmt dabei im Wesentlichen den Wirkungsbereich quer zur Bewegungsrichtung. Vorzugsweise ist die Rotation des punktförmigen Flüssigkeitsstrahls derart an die Bewegungsgeschwindigkeit der Wirkmittelabgabeeinheit angepasst, dass eine flächige Bearbeitung des Bodens erfolgt. Die Düse bzw. Öffnung der Wirkmittelabgabeeinheit kann einen Durchmesser von ungefähr 1,15 mm aufweisen, um den punktförmigen Flüssigkeitsstrahl zu erzeugen.

Vorzugsweise erzeugt der linienförmige Flüssigkeitsstrahl eine quer zur Bewegungsrichtung schmal verlaufende Aufprallfläche, deren Breite zwischen 0,3 cm und 1 cm liegt.

Ferner kann der flächenförmige Flüssigkeitsstrahl eine Aufprallfläche mit einer Breite in Bewegungsrichtung von circa 1 cm bis 5 cm aufweisen. Mit anderen Worten, die Längsrichtung der Aufprallfläche verläuft im Wesentlichen quer zur Bewegungsrichtung. Alternativ kann die Längsrichtung der Aufprallfläche parallel zur Bewegungsrichtung verlaufen und der Flüssigkeitsstrahl wird quer zur Bewegungsrichtung im Bereich des Wirkungsbereichs hin und her bewegt.

Vorzugsweisen kann die Wirkmittelabgabevorrichtung derart ausgebildet sein, dass das Wirkmittel an der Wirkmittelabgabeeinheit mit einer Geschwindigkeit von ungefähr 100 m/s bis 350 m/s, bevorzugt von ungefähr 150 m/s bis 300 m/s, und besonders bevorzugt von ungefähr 200 m/s bis 250 m/s austritt.

Die Wirkmittelabgabevorrichtung ist derart ausgebildet, um das Wirkmittel mit einer Durchflussmenge von ungefähr 5 l/min bis 20 l/min, bevorzugt mit ungefähr 12 l/min bis 17 l/min, und besonders bevorzugt mit ungefähr 13 l/min bis 15 l/min abzugeben.

Vorzugsweise kann die Vorrichtung dazu ausgebildet sein, das Wirkmittel von der Wirkmittelabgabeeinheit in einer Abgabehöhe in Bezug auf die landwirtschaftliche Fläche abzugeben und wobei die Abgabehöhe ungefähr 10 cm bis 50 cm, bevorzugt ungefähr 15 cm bis 35 cm, und besonders bevorzugt ungefähr 20 cm bis 30 cm beträgt.

Mit anderen Worten, die Düse bzw. Öffnung an der das Wirkmittel an der Wirkmittelabgabeeinheit austritt, ist ungefähr 10 cm bis 50 cm, bevorzugt ungefähr 15 cm bis 35 cm, und besonders bevorzugt ungefähr 20 cm bis 30 cm über dem Boden bzw. der landwirtschaftlichen Fläche angeordnet.

Vorzugsweise ist die Vorrichtung dazu ausgebildet, die Abgabehöhe einzustellen. Ferner kann die Vorrichtung eine der Wirkmittelabgabeeinheit zugeordnete Führungseinrichtung aufweist, die die Abgabehöhe während des Bewegens der Wirkmittelabgabeeinheit über die landwirtschaftliche Fläche im Wesentlichen konstant hält. Vorteilhafterweise können durch Beibehalten der Abgabehöhe Bodenunebenheiten der landwirtschaftlichen Fläche ausgeglichen werden, um ein gleichbleibendes Bekämpfungsergebnis des pflanzlichen Bewuchses zu ermöglichen.

Vorzugsweise kann die Vorrichtung eine Vielzahl von individuellen Wirkmittelabgabeeinheiten aufweisen, welche bevorzugt überlappende Wirkungsbereiche aufweisen. Die Wirkungsbereiche der Wirkmittelabgabeeinheiten können allerdings auch aneinandergrenzen bzw. voneinander abgegrenzt sein und sich somit nicht überlappen. Vorteilhafterweise kann der Gesamtwirkungsbereich durch die Verwendung einer Vielzahl von Wirkmittelabgabeeinheiten erhöht werden. Vorzugsweise können die Vielzahl von Wirkmittelabgabeeinheiten quer zur Bewegungsrichtung nebeneinander angeordnet sein. Insbesondere können die Vielzahl von Wirkmittelabgabeeinheiten quer zur Bewegungsrichtung auf einer Höhe angeordnet sein.

Vorteilhafterweise kann die Abgabehöhe für jede einzelne Wirkmittelabgabeeinheit individuell einstellbar sein und die Abgabehöhe jeder Wirkmittelabgabeeinheit während des Bewegens der Wirkmittelabgabeeinheiten im Wesentlichen beibehalten werden, bevorzugt unabhängig von den anderen Wirkmittelabgabeeinheiten. Vorzugsweise können pro Meter Arbeitsbreite quer zur Bewegungsrichtung mehr als eine und maximal 20 Wirkmittelabgabeeinheiten genutzt werden.

Ferner kann die Vorrichtung dazu ausgebildet sein, Merkmale des zuvor genannten Aspekts, insbesondere der zweiten Alternative, aufzuweisen.

Im Folgenden soll die Erfindung anhand der Zeichnung näher erläutert werden. Dazu zeigen
- **Figur 1**: eine an einer mobilen Einheit angeordnete Vorrichtung zur gezielten Abgabe eines Wirkmittels auf einen Boden;
- **Figur 2**: eine schematische Darstellung bezüglich eines Verfahrens zur gezielten Abgabe eines Wirkmittels auf einen Boden;
- **Figur 3**: eine Karte mit Ortsinformationen eines ersten Pflanzentyps;
- **Figur 4**: eine vergrößerte Darstellung der Fig 5;
- **Figur 5**: eine Aufprallfläche eines punktförmigen Strahls, insbesondere Flüssigkeitsstrahls;
- **Figur 6**: eine Aufprallfläche eines linienförmigen Strahls, insbesondere Flüssigkeitsstrahls; und
- **Figur 7**: eine Aufprallfläche eines flächenförmigen Strahls, insbesondere Flüssigkeitsstrahls.

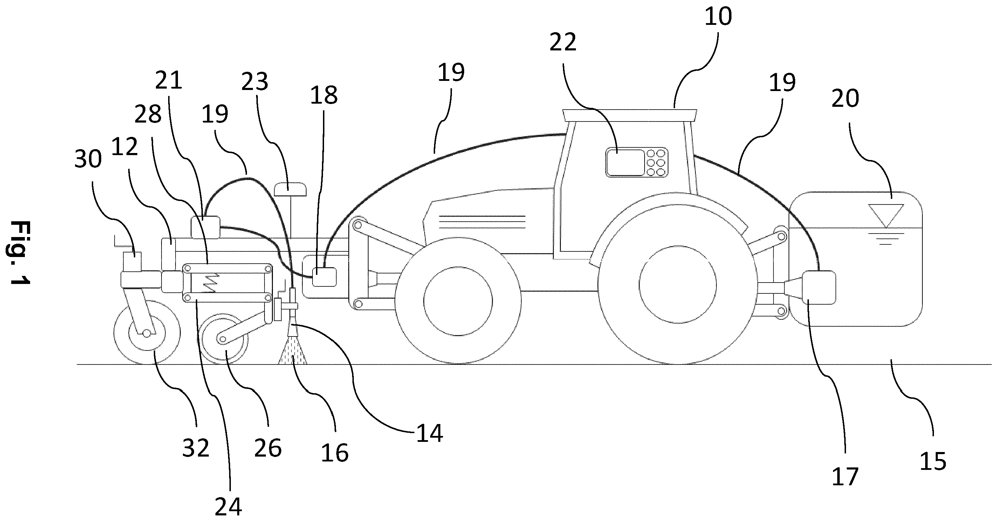

**Figur 1** zeigt als mobile Einheit einen Traktor 10, an dessen Vorderseite eine bewegbare Trägereinheit 12 angeordnet ist. Des Weiteren sind an der bewegbaren Trägereinheit 12 eine Vielzahl von Wirkmittelabgabeeinheiten 14 angeordnet (in Betrachtungsrichtung der Figur 1 hintereinander), die mittels des Traktors 10 über einen Boden bzw. eine landwirtschaftliche Fläche 15 bewegt werden können. Die Wirkmittelabgabeeinheiten 14 sind jeweils einzeln von einer Kontrolleinheit 22 ansteuer- bzw. aktivierbar, um ein Wirkmittel in Form eines Strahls 16, insbesondere Flüssigkeitsstahls, auf den Boden bzw. die landwirtschaftliche Fläche 15 abzugeben. Durch den Strahl 16 wird das Wirkmittel in einem begrenzten Wirkungsbereich auf die landwirtschaftliche Fläche 15 abgegeben. Ferner ist an der Rückseite des Traktors 10 ein Vorratsbehälter 20 angeordnet, in welchem das Wirkmittel, vorzugsweise eine Flüssigkeit, beispielsweise Wasser, bevorratet ist. Mittels einer an der Rückseite des Traktors 10 angeordneten ersten Pumpeneinheit 17 kann das Wirkmittel von dem Vorratsbehälter 20 zu einer zweiten Pumpeneinheit 18 gepumpt werden. Die zweite Pumpeneinheit 18 kann das Wirkmittel mit einem entsprechend hohem Druck zur Wirkmittelabgabeeinheiten 14 pumpen. Insbesondere kann die zweite Pumpeneinheit 18 derart ausgebildet sein, dass das Wirkmittel mit einem Druck von ca. 150 bar bis 1200 bar über die Wirkmittelabgabeeinheit 14 abgegeben wird. Ferner sind der Vorratsbehälter 20, die erste Pumpeneinheit 17, die zweite Pumpeneinheit 18 und die Wirkmittelabgabeeinheit 14 mit entsprechenden Hydraulikleitungen 19 miteinander verbunden. Jede Wirkmittelabgabeeinheit 14 kann dabei eine Düse bzw. Öffnung aufweisen, mit der das Wirkmittel, in Richtung des Bodens bzw. der landwirtschaftlichen Fläche 15, gerichtet abgegeben wird. Ferner kann die Wirkmittelabgabeeinheit 14 ein elektrisches oder elektro-mechanisches Ventil 21 aufweisen, welches durch die Kontrolleinheit 22 aktivier- bzw. steuerbar ist, sodass das Wirkmittel mittels der Wirkmittelabgabeeinheit 14 abgegeben werden kann. Ferner kann vorgesehen sein, dass zwischen der zweiten Pumpeneinheit 18 und dem Ventil 21 ein Rückführungsventil (nicht dargestellt) vorgesehen ist, welches das Wirkmittel in den Vorratsbehälter 20 zurückführen kann. Insbesondere kann das Rückführungsventil so angesteuert werden, dass es geöffnet ist, wenn die Wirkmittelabgabeeinheit 14 nicht aktiviert ist und es geschlossen ist, wenn die Wirkmittelabgabeeinheit 14 aktiviert ist. Vorteilhafterweise kann somit der Druck im Hydraulikkreis zwischen Pumpe 18 und Ventil 21 reduziert werden, wenn die Wirkmittelabgabeeinheit 14 nicht aktiviert ist.

Es ist vorgesehen, dass das Wirkmittel derart durch die Wirkmittelabgabeeinheit 14 abgegeben wird, dass der durch das Wirkmittel auf den Boden 15 verursachte Druck mindestens 50 N/cm², bevorzugt mindestens 100 N/cm² und besonders bevorzugt mindestens 200 N/cm² beträgt. Für den zuvor genannten Wert wird angenommen, dass das Wirkmittel ungehindert von der Wirkmittelabgabeeinheit 14 auf den Boden 15 abgegeben wird. Mit anderen Worten, es befinden sich keine Hindernisse zwischen der Wirkmittelabgabeeinheit 14 und dem Boden 15 auf die das Wirkmittel treffen könnte, so dass das Wirkmittel direkt auf den Boden trifft. Vorteilhafterweise kann bei diesem Druck eine ausreichende Beschädigung des von dem Wirkmittel erfassten pflanzlichen Bewuchs sichergestellt werden. Der zuvor angegebene Druckwert wurde ermittelt, indem unter eine Wirkmittelabgabeeinheit eine Waage angeordnet wurde, auf welche das Wirkmittel abgegeben wurde. Dier Ermittlung wurde ferner unter den Ausschluss von Seitenwinden vorgenommen.

Bevorzugt beträgt der Druck mindestens 310 N/cm². Vorteilhafterweise kann bei diesem Druck zusätzlich zur überirdischen Bekämpfung des pflanzlichen Bewuchses auch eine zuverlässige unterirdische Bekämpfung des pflanzlichen Bewuchses erfolgen. Insbesondere könne Wurzeln oder Zwiebeln des pflanzlichen Bewuchses zumindest teilweise zerstört werden.

Vorteilhafterweise ermöglichen die vorgeschlagenen Drücke eine ausreichende Zerstörung/Zerkleinerung des pflanzlichen Bewuchses, um eine zügige Verrottung bzw. Zersetzung und nachhaltige Bekämpfung des ersten Pflanzentyps zu ermöglichen. So haben sich die angegebenen Werte insbesondere für die Bekämpfung der Herbstzeitlosen (Colchicum autumnale) als wirkungsvoll erwiesen. Diese Werte sind allerdings nicht auf die Bekämpfung der Herbstzeitlosen beschränkt und können auch für andere (unerwünschte) Pflanzentypen angewendet werden.

Vorzugsweise beträgt die Dauer der Wirkmittelabgabe auf einen Bereich des pflanzlichen Bewuchses bzw. Bodens weniger als 1 s (Sekunde), bevorzugt weniger als 0,5 s.

Ferner kann die bewegbare Trägereinheit 12 einen Verstellmechanismus 30 aufweisen, mit dem die Höhe der Trägereinheit 12 über den Boden bzw. der landwirtschaftlichen Fläche 15 eingestellt werden kann. Insbesondere kann mittels des Verstellmechanismus 30 eine gleichzeitige Höhenverstellung aller Wirkmittelabgabeeinheiten 14 erfolgen. Ferner kann jede Wirkmittelabgabeeinheit 14 einen separate Höhenverstellung aufweisen, sodass die Höhe einer Wirkmittelabgabeeinheit 14 über der landwirtschaftlichen Fläche 15 für jede Wirkmittelabgabeeinheit 14 getrennt eingestellt werden kann. Durch das Einstellen der Höhe wird insbesondere die Abgabehöhe des Wirkmittels, d.h. der Abstand zwischen der Düse bzw. Öffnung an dem das Wirkmittel austritt und der landwirtschaftlichen Fläche 15, eingestellt.

Vorzugsweise kann die Abgabehöhe ungefähr 10 cm bis 50 cm, bevorzugt ungefähr 15 cm bis 35 cm, und besonders bevorzugt ungefähr 20 cm bis 30 cm betragen.

Des Weiteren weist die bewegbare Trägereinheit 12 für jede Wirkmittelabgabeeinheit 14 eine zugeordnete Führungseinrichtung 24 auf, welche jeweils ein Rad 26 aufweist, das die landwirtschaftliche Fläche 15 kontaktiert. Des Weiteren weist jede Führungseinrichtung 24 eine parallelogramm-artige Rahmenkonstruktion 28 auf, die das Rad 26 mit der bewegbaren Trägereinheit 12 mechanisch verbindet. Ferner ist die parallelogramm-artige Rahmenkonstruktion 28 beweglich an der bewegbaren Trägereinheit 12 gelagert, um Bodenunebenheiten auf eine jeweilige zugeordnete Wirkmittelabgabeeinheit 14 zu übertragen. Insbesondere ermöglicht die Rahmenkonstruktion 28, dass die Wirkmittelabgabeeinheit 14 relativ zu der Trägereinheit 12 in vertikaler Richtung (im Wesentlich senkrecht zu dem Boden 15) bewegbar ist. Vorteilhafterweise kann somit erreicht werden, dass die Wirkmittelabgabeeinheit 14 mit einer im Wesentlichen gleichbleibenden Abgabehöhe über die landwirtschaftliche Fläche 15 bewegt werden kann. Ferner kann die bewegbare Trägereinheit 12 ein Haupt-Rad 32 aufweisen, welches die bewegbare Trägereinheit 12 gegenüber der landwirtschaftlichen Fläche 15 abstützt. Alternativ kann die Trägereinheit 12 einen Abstandsmesser aufweisen, mit welchem der Abstand bevorzugt berührungslos zum Boden ermittelt wird. Anhand des ermittelten Abstands kann mittels einer entsprechenden Betätigungseinrichtung, bspw. einem Aktuator, die Abgabehöhe der Wirkmittelabgebeinheit 14 konstant gehalten werden bzw. bei der Bewegung nachgeführt werden.

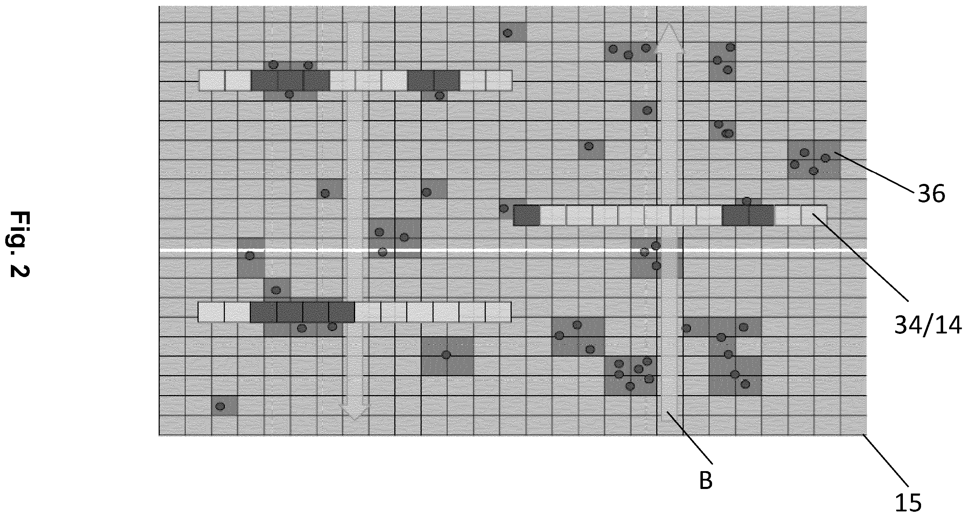

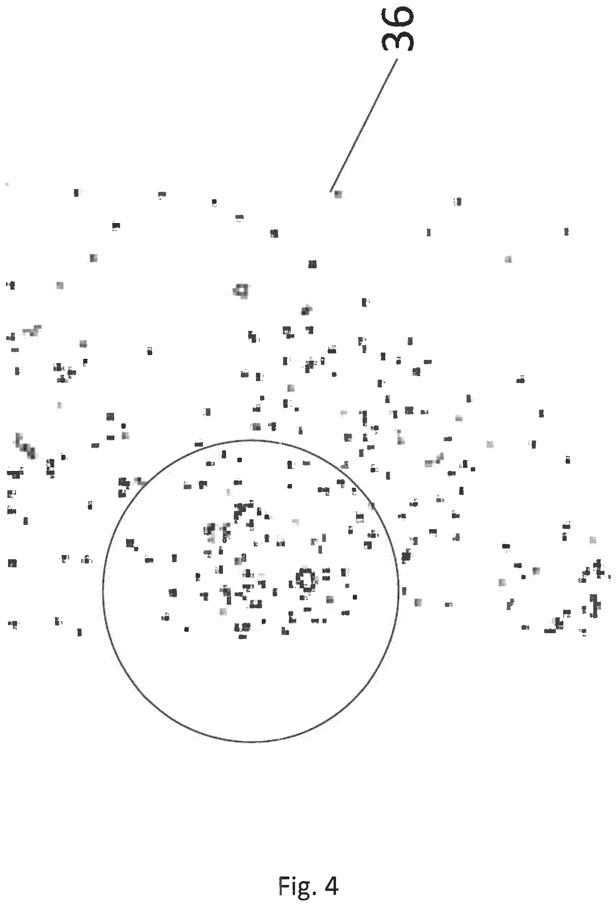

Bezugnehmend auf Figur 2 wird im Folgenden die Verwendung der Wirkmittelabgabeeinheit 14 erläutert. Figur 2 zeigt dabei aus einer Vogelperspektive eine Draufsicht auf eine schematisch dargestellte landwirtschaftliche Fläche 15. Ferner stellen die quer zur Bewegungsrichtung B angeordneten Kästchen den begrenzten Wirkungsbereich 34 einer jeweiligen Wirkmittelabgabeeinheit 14 dar. In Figur 4 sind somit zwölf Wirkmittelabgabeeinheiten 14 dargestellt. Vorzugsweise weist der begrenzte Wirkungsbereich 34 eine Breite von ungefähr 5 cm bis 50 cm, bevorzugt von 10 bis 40 cm, und besonders bevorzugt von 10 cm bis 30 cm quer zur Bewegungsrichtung B auf. Die Länge des Wirkungsbereichs 34 in Bewegungsrichtung B wird dahingegen unter anderem von der Dauer der Aktivierung der Wirkmittelabgabeeinheit 14 und der Bewegungsgeschwindigkeit, mit der die Wirkmittelabgabeeinheit 14 in Bewegungsrichtung B bewegt wird, bestimmt. Vorzugsweise ist die Bewegungsgeschwindigkeit der Wirkmittelabgabeeinheit 14 relativ zu dem Boden in Bewegungsrichtung größer als 0 km/h. Vorzugsweise beträgt die Bewegungsgeschwindigkeit in Bewegungsrichtung ca. 0,5 km/h bis 20 km/h, bevorzugt 2 km/h bis 10km/h, und besonders bevorzugt 3 km/h bis 6 km/h.

Ferner sind in Figur 2 Ortsinformationen 36 vermerkt, welche das Vorkommen eines ersten Pflanzentyps, der mit dem Wirkmittel bekämpft werden soll, markiert. Während dem Bewegen der Trägereinheit 12 bzw. der Wirkmittelabgabeeinheiten 14 über die landwirtschaftliche Fläche 15 entlang der Bewegungsrichtung B gleicht die Kontrolleinheit 22 die augenblickliche Positionsinformation der Wirkmittelabgabeeinheiten 14 mit der Ortsinformation 36 ab. Die augenblickliche Positionsinformation kann dabei über eine Antenne 23 erfasst werden, mit der ein Positionsbestimmungssignal, bspw. GPS, empfangen werden kann. Vorzugsweise ist die Antenne 23 in horizontaler Richtung auf gleicher Höhe wie die Wirkmittelabgabeeinheiten 14 angeordnet, um die Positionsbestimmung der Wirkmittelabgabeeinheiten 14 zu vereinfachen. Wenn der Wirkungsbereich 36 einer Wirkmittelabgabeeinheit 14 mit der Ortsinformation 36 im Wesentlichen übereinstimmt, aktiviert die Kontrolleinheit 22 die entsprechende Wirkmittelabgabeeinheit 14, um das Wirkmittel mit dem gerichteten Strahl bzw. Flüssigkeitsstrahl 16 auf die landwirtschaftliche Fläche 15 abzugeben. Dabei wird das Wirkmittel durch die Wirkmittelabgabeeinheit 14 derart abgegeben, dass es zu einer mechanischen Beschädigung des in dem Wirkungsbereich 36 vorhandenen pflanzlichen Bewuchses kommt. Mit anderen Worten, das Wirkmittel bekämpft im Wirkungsbereich 36 einer entsprechenden Wirkmittelabgabeeinheit 14 den pflanzlichen Bewuchs auf mechanische Art und Weise, d. h. durch Zerkleinern/Zertrennen/Schneiden des pflanzlichen Bewuchses. Dabei zeigen helle Kästchen 36, dass die jeweilige Wirkmittelabgabeeinheit 14 deaktiviert ist, also kein Wirkmittel abgibt, und dunkle Kästchen 36, dass die Wirkmittelabgabeeinheit 14 aktiviert ist, also das Wirkmittel abgegeben wird. Wie in Figur 2 dargestellt, sind die Wirkmittelabgabeeinheiten 14 quer zur Bewegungsrichtung B nebeneinander angeordnet, um den Gesamtwirkungsbereich entsprechend zu vergrößern. Dabei können sich die Wirkungsbereiche benachbarter Wirkmittelabgabeeinheiten 14 überlappen. Nach dem bevorzugt unmittelbaren Überfahren der Ortsinformation 36 mit dem Wirkungsbereich 34 deaktiviert die Kontrolleinheit 22 die entsprechende Wirkmittelabgabeeinheit 14. Alternative kann der erste Pflanzentyp einem erwünschten Pflanzentyp entsprechen, der nicht bekämpft werden soll. Dazu kann die Kontrolleinheit 22 eine aktivierte Wirkmittelabgabeeinheit 14 deaktivieren, um eine Wirkmittelabgabe auf den gewünschten Pflanzentyp zu verhindern.

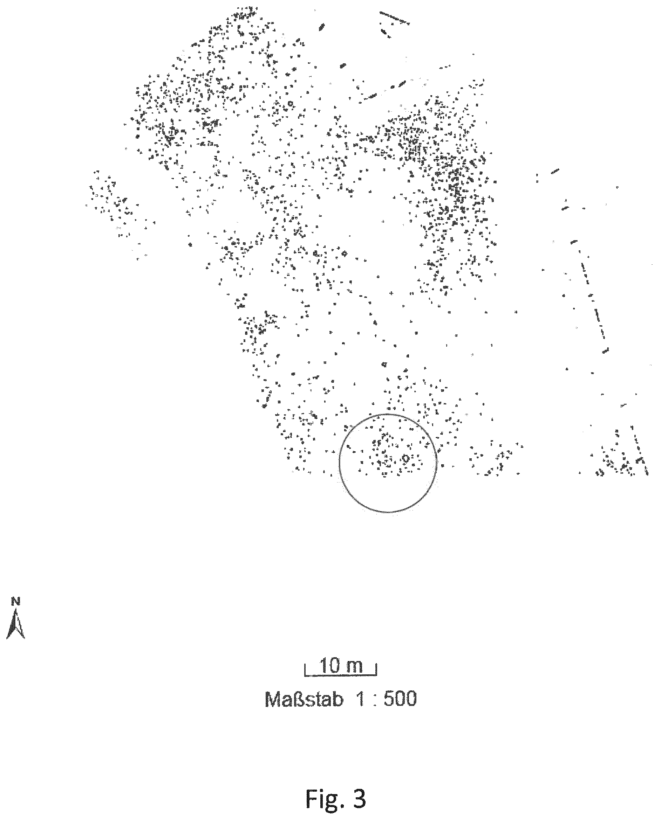

In den Figuren 3 und 4 ist schematisch eine vektorbasierte Karte dargestellt, welche in der Kontrolleinheit 22 gespeichert werden kann. Dabei enthält die vektorbasierte Karte Ortsinformationen bezüglich des ersten Pflanzentyps, d. h. des Pflanzentyps, der durch das Wirkmittel bekämpft werden soll. Diese Ortsinformationen können einzelne geographische Koordinaten darstellen und oder Flächen bzw. Bereiche, in welchen das Wirkmittel eingesetzt werden soll (siehe hierzu insbesondere Figur 4, welche den in Figur 3 markierten Ausschnitt vergrößert darstellt).

Wie eingangs erwähnt ist die Wirkmittelabgabeeinheit 14 dazu ausgelegt, einen gerichteten Strahl oder Flüssigkeitsstrahl 16 in Richtung der landwirtschaftlichen Fläche 15 abzugeben. Dabei erzeugt der Flüssigkeitsstrahl 16 beim Auftreffen auf der landwirtschaftlichen Fläche 15, welche als idealisierte Ebene angenommen wird, eine entsprechende Aufprallfläche 40.

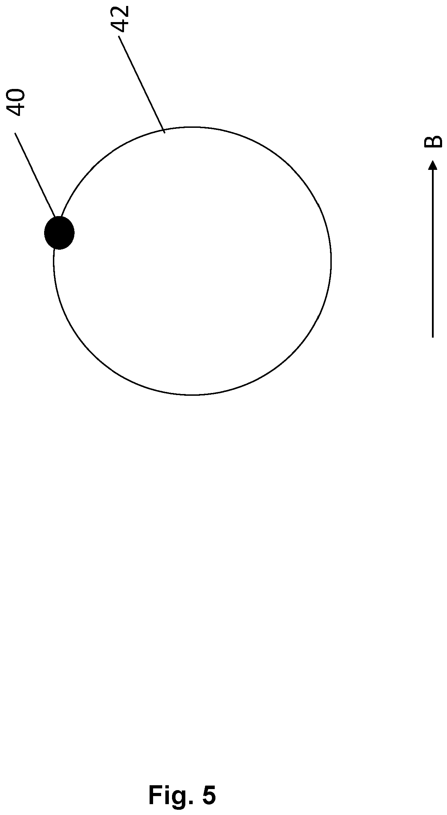

In Figur 5 ist die Aufprallfläche 40 eines punktförmigen Flüssigkeitsstrahls idealisiert dargestellt. Die Aufprallfläche des punktförmigen Flüssigkeitsstrahls kann dabei eine Fläche von ungefähr 0,01 cm² bis 3 cm², bevorzugt von ungefähr 0,05 cm² bis 2 cm² und besonders bevorzugt von ungefähr 0,1 cm² bis 1 cm² betragen. Ferner kann die Aufprallfläche 40 im Wesentlichen punktförmig sein. Des Weiteren kann die Wirkmittelabgabeeinheit 14 derart rotierend an der bewegbaren Trägereinheit 12 angeordnet sein, dass die Aufprallfläche 40 auf einer im Wesentlichen kreisförmigen Bahn 42 bewegt wird (kreisförmig, wenn die Wirkmittelabgabeeinheit 14 nicht bewegt wird). Der Durchmesser des durch die kreisförmige Bahn 42 gebildeten Kreises entspricht dabei der Breite des begrenzten Wirkungsbereichs 34 quer zur Bewegungsrichtung B.

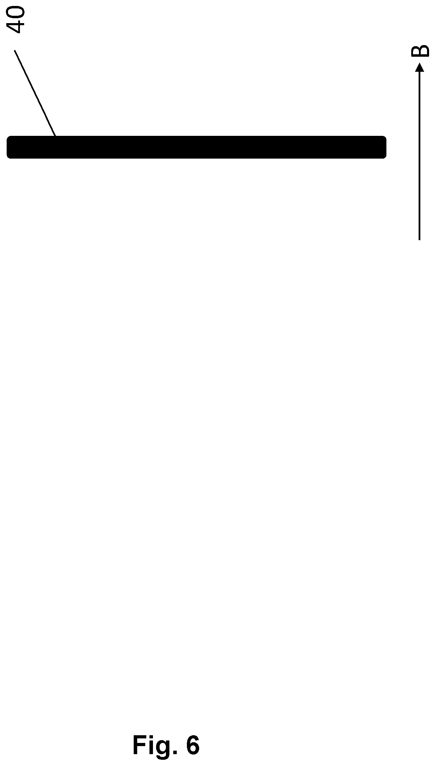

In Figur 6 ist ferner die Aufprallfläche 40 eines linienförmigen Flüssigkeitsstrahls abgebildet, der durch die Wirkmittelabgabeeinheit 14 erzeugt werden kann. Die Längsrichtung der Aufprallfläche 40 verläuft dabei im Wesentlichen quer zur Bewegungsrichtung B. Ferner weist die Aufprallfläche 40 eine Breite zwischen 0,3 cm und 1 cm auf. Die Aufprallfläche weist dabei eine im Wesentlichen rechteckige Form auf.

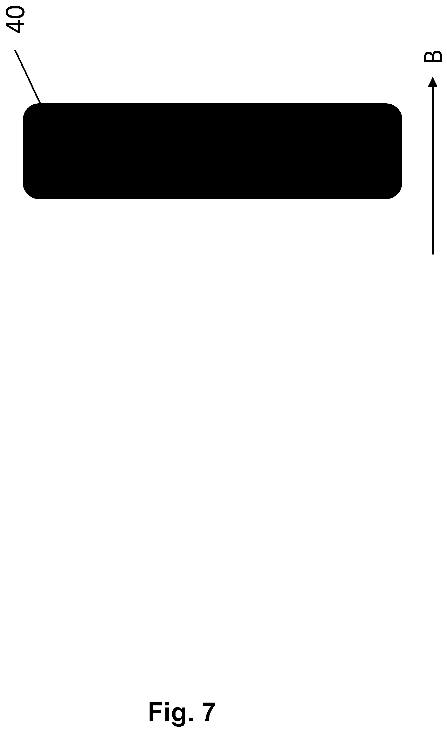

Ferner stellt Figur 7 die Aufprallfläche 40 eines flächenförmigen Flüssigkeitsstrahls 16 dar, der durch die Wirkmittelabgabeeinheit 14 erzeugt werden kann. Die Längsrichtung der Aufprallfläche 40 verläuft dabei im Wesentlichen quer zur Bewegungsrichtung B. Ferner weist die Aufprallfläche 40 eine Breite zwischen 1 cm und 5 cm auf. Die Aufprallfläche weist dabei eine im Wesentlichen rechteckige Form auf.

Die in den Figuren 6 und 7 gezeigten Beispiele stellen keine erfindungsgemäßen Ausführungsbeispiele dar.

Des Weiteren kann vorgesehen sein, dass das Wirkmittel an der Wirkmittelabgabeeinheit mit einer Geschwindigkeit von ungefähr 100 m/s bis 350 m/s, bevorzugt von ungefähr 150m/s bis 300 m/s, und besonders bevorzugt von ungefähr 200 m/s bis 250 m/s austritt.

Ferner kann das Wirkmittel mit einer Durchflussmenge von ungefähr 5 l/min bis 20 l/min, bevorzugt mit ungefähr 12 l/min bis 17 l/min, und besonders bevorzugt mit ungefähr 13 I/min bis 15 l/min durch die Wirkmittelabgabeeinheit 14 abgegeben werden. Des Weiteren ist die Düse bzw. Öffnung der Wirkmittelabgabeeinheit 14, an der das Wirkmittel austritt, im Wesentlichen senkrecht zur landwirtschaftlichen Fläche 15 geneigt.

### Bezugszeichenliste

- 10: mobile Einheit/Traktor
- 12: bewegbare Trägereinheit
- 14: Wirkmittelabgabeeinheiten
- 15: landwirtschaftlichen Fläche/Boden
- 16: Strahl des Wirkmittels / Flüssigkeitsstrahl
- 17: erste Pumpeneinheit
- 18: zweite Pumpeneinheit
- 19: Hydraulikleitung
- 20: Vorratsbehältnis
- 22: Kontrolleinheit
- 23: Antenne
- 24: Führungseinrichtung
- 26: Rad
- 28: Rahmenkonstruktion
- 30: Verstellmechanismus
- 32: Haupt-Rad
- 34: begrenzter Wirkungsbereich
- 36: Ortsinformation
- 40: Aufprallfläche
- 42: kreisförmige Bahn
- B: Bewegungsrichtung

## Patentansprüche

1. Verfahren zur gezielten Abgabe eines Wirkmittels auf pflanzlichen Bewuchs auf einem Boden (15), insbesondere auf eine landwirtschaftliche Nutzfläche, wobei das Verfahren folgende Schritte aufweist:
Bewegen einer Wirkmittelabgabeeinheit (14) entlang einer Bewegungsrichtung (B) über den Boden (15), wobei durch Aktivieren der Wirkmittelabgabeeinheit (14) eine Abgabe des Wirkmittels als punktförmiger Flüssigkeitsstrahl in einem begrenzten Wirkungsbereich (34) erfolgt;
Abgleichen einer augenblicklichen Position der Wirkmittelabgabeeinheit (14) mit einer Ortsinformation (36) eines auf dem Boden auftretenden ersten Pflanzentyps; und
Aktivieren der Wirkmittelabgabeeinheit (14) oder Deaktivieren einer aktivierten Wirkmittelabgabeeinheit (14), wenn die augenblickliche Position der Wirkmittelabgabeeinheit (14) der Ortsinformation (36) des ersten Pflanzentyps entspricht,
wobei durch Abgabe des punktförmigen Flüssigkeitsstrahls eine mechanische Beschädigung von innerhalb des Wirkungsbereichs (34) befindlichen pflanzlichem Bewuchs erfolgt, **dadurch gekennzeichnet, dass** die Wirkmittelabgabeeinheit (14) den punktförmigen Flüssigkeitsstrahl einer zur Bewegungsrichtung (B) zusätzlich überlagerten Bewegung aussetzt und den punktförmigen Flüssigkeitsstrahl derart abgibt, dass der durch den punktförmigen Flüssigkeitsstrahl auf dem Boden (15) verursachte Druck mindestens 50 N/cm² beträgt und der Flüssigkeitsstrahl für mindestens 100 ms und mit einer Durchflussmenge von 5 l/min bis 20 l/min abgeben wird.

2. Verfahren nach Anspruch 1, wobei das Wirkmittel eine Flüssigkeit, insbesondere Wasser, aufweist und bevorzugt keine chemischen Pflanzenvernichtungsmittel und/oder keine biologischen Pflanzenvernichtungsmittel enthält.

3. Verfahren nach Anspruch 1 oder 2, wobei das Wirkmittel als gerichteter Flüssigkeitsstrahl in Richtung des Bodens (15) abgegeben wird.

4. Verfahren nach einem der Ansprüche 1 bis 3, wobei der durch den Flüssigkeitsstrahl auf dem Boden verursachte Druck mindestens 100 N/cm², bevorzugt mindestens 200 N/cm², beträgt.

5. Verfahren nach einem der Ansprüche 1 bis 4, wobei der punktförmige Flüssigkeitsstrahl (16) eine Aufprallfläche (40) von ungefähr 0,01 cm² bis 3 cm², bevorzugt von ungefähr 0,05 cm² bis 2 cm² und besonders bevorzugt von ungefähr 0,1 cm² bis 1 cm² aufweist, und wobei der punktförmige Flüssigkeitsstrahl (16) bevorzugt einer rotierenden Bewegung ausgesetzt wird.

6. Verfahren nach einem der vorangegangenen Ansprüche, wobei das Wirkmittel an der Wirkmittelabgabeeinheit (14) mit einer Geschwindigkeit von ungefähr 100 m/s bis 350 m/s, bevorzugt von ungefähr 150 m/s bis 300 m/s, und besonders bevorzugt von ungefähr 200 m/s bis 250 m/s austritt; und/oder
wobei das Wirkmittel durch die Wirkmittelabgabeeinheit (14) mit 12 l/min bis 17 l/min, bevorzugt mit 13 l/min bis 15 l/min, abgegeben wird; und/oder
wobei das Wirkmittel von der Wirkmittelabgabeeinheit (14) in einer Abgabehöhe in Bezug auf den Boden (15) abgegeben wird und die Abgabehöhe ungefähr 10 cm bis 50 cm, bevorzugt ungefähr 15 cm bis 35 cm, und besonders bevorzugt ungefähr 20 cm bis 30 cm beträgt, und wobei das Verfahren optional den Schritt aufweist:
Einstellen der Abgabehöhe, bevorzugt vor dem Bewegen-Schritt, und wobei vorzugsweise während des Bewegen-Schritt die Abgabehöhe im Wesentlichen beibehalten wird.

7. Verfahren nach einem der vorangegangenen Ansprüche, wobei die Wirkmittelabgabeeinheit (14) eine Vielzahl von individuellen Wirkmittelabgabeeinheiten (14) aufweist, welche überlappende Wirkungsbereiche (34) aufweisen.

8. Vorrichtung zur gezielten Abgabe eines Wirkmittels auf pflanzlichen Bewuchs auf einem Boden, insbesondere auf eine landwirtschaftliche Nutzfläche (15), aufweisend:
eine Wirkmittelabgabeeinheit (14), welche dazu ausgelegt ist, entlang einer Bewegungsrichtung (B) über den Boden (15) bewegt zu werden, wobei die Wirkmittelabgabeeinheit (14) aktivierbar ist und durch Aktivieren der Wirkmittelabgabeeinheit (14) eine Abgabe des Wirkmittels als punktförmiger Flüssigkeitsstrahl in einem begrenzten Wirkungsbereich (34) erfolgt, und
wobei die Wirkmittelabgabeeinheit (14) derart ausgebildet ist, dass durch Abgabe des Flüssigkeitsstrahls eine mechanische Beschädigung von innerhalb des Wirkungsbereichs (34) befindlichen pflanzlichem Bewuchs erfolgt,
eine Kontrolleinheit (22), die dazu ausgelegt ist:
- eine augenblickliche Position der Wirkmittelabgabeeinheit (14) mit einer Ortsinformation (36) eines auf dem Boden (15) auftretenden ersten Pflanzentyps abzugleichen, und
- die Wirkmittelabgabeeinheit (14) zu aktivieren, wenn die augenblickliche Position der Wirkmittelabgabeeinheit (14) im Wesentlichen der Ortsinformation (36) des ersten Pflanzentyps entspricht, oder eine aktivierte Wirkmittelabgabeeinheit (14) zu deaktivieren, wenn die augenblickliche Position der Wirkmittelabgabeeinheit (14) im Wesentlichen der Ortsinformation (36) des ersten Pflanzentyps entspricht, wobei die Vorrichtung **dadurch gekennzeichnet ist, dass** die Wirkmittelabgabeeinheit (14) derart ausgebildet ist, den punktförmigen Flüssigkeitsstrahl einer zur Bewegungsrichtung (B) zusätzlich überlagerten Bewegung auszusetzen, den punktförmigen Flüssigkeitsstrahl für mindestens 100 ms und mit einer Durchflussmenge von 5 l/min bis 20 l/min abzugeben und den punktförmigen Flüssigkeitsstrahl ferner derart abzugeben, dass der durch den punktförmigen Flüssigkeitsstrahl auf dem Boden (15) verursachte Druck mindestens 50 N/cm² beträgt.

9. Vorrichtung nach Anspruch 8, wobei die Wirkmittelabgabeeinheit (14) dazu ausgebildet ist, das Wirkmittel als gerichteten Flüssigkeitsstrahl in Richtung des Bodens abzugeben; und/oder
wobei der Flüssigkeitsstrahl derart durch die Wirkmittelabgabeeinheit abgegeben wird, dass der durch den Flüssigkeitsstrahl auf dem Boden verursachte Druck mindestens 100 N/cm², bevorzugt mindestens 200 N/cm², beträgt.

10. Vorrichtung nach Anspruch 8 oder 9, wobei der punktförmiger Flüssigkeitsstrahl (16) eine Aufprallfläche (40) von ungefähr 0,01 cm² bis 3 cm², bevorzugt von ungefähr 0,05 cm² bis 2 cm² und besonders bevorzugt von ungefähr 0,1 cm² bis 1 cm² aufweist, und wobei bevorzugt die Wirkmittelabgabeeinheit (14) dazu ausgelegt ist, den punktförmigen Strahl (16) einer im Wesentlichen rotierenden Bewegung auszusetzen.

11. Vorrichtung nach einem der Ansprüche 8 bis 10, wobei das Wirkmittel an der Wirkmittelabgabeeinheit (14) mit einer Geschwindigkeit von ungefähr 100 m/s bis 350 m/s, bevorzugt von ungefähr 150 m/s bis 300 m/s, und besonders bevorzugt von ungefähr 200 m/s bis 250 m/s austritt; und/oder
wobei die Wirkmittelabgabeeinheit (14) dazu ausgebildet ist, das Wirkmittel mit einer Durchflussmenge von 12 l/min bis 17 l/min, bevorzugt mit 13 l/min bis 15 l/min, abzugeben; und/oder
wobei die Vorrichtung eine Vielzahl von individuellen Wirkmittelabgabeeinheiten (14) aufweist, welche überlappende Wirkungsbereiche (34) aufweisen.

12. Vorrichtung nach einem der Ansprüche 8 bis 11, wobei die Wirkmittelabgabeeinheit (14) dazu ausgebildet ist, das Wirkmittel von der Wirkmittelabgabeeinheit (14) in einer Abgabehöhe in Bezug auf die landwirtschaftliche Fläche (15) abzugeben und wobei die Abgabehöhe ungefähr 10 cm bis 50 cm, bevorzugt ungefähr 15 cm bis 35 cm, und besonders bevorzugt ungefähr 20 cm bis 30 cm beträgt.

13. Vorrichtung nach Anspruch 12, wobei die Abgabehöhe einstellbar ist, und/oder die Vorrichtung eine der Wirkmittelabgabeeinheit (14) zugeordnete Führungseinrichtung (24) aufweist, die die Abgabehöhe während des Bewegens der Wirkmittelabgabeeinheit (14) über den Boden (15) im Wesentlichen konstant hält.

## Claims

1. A method for targeted delivery of an active agent to vegetation on the soil (15), in particular on an agricultural area, wherein the method has the following steps:
Moving an active agent delivery unit (14) along a direction of movement (B) over the soil (15), wherein, by activating the active agent delivery unit (14), the active agent is delivered as a punctiform stream of liquid in a limited effective range (34);
Comparing a current position of the active agent delivery unit (14) with location information (36) of a first plant type occurring on the soil; and
Activating the active agent delivery unit (14) or deactivating an activated active agent delivery unit (14) when the current position of the active agent delivery unit (14) corresponds to the location information (36) of the first plant type,
wherein delivery of the punctiform stream of liquid causes mechanical damage to vegetation located within the effective range (34),
**characterized in that**
the active agent delivery unit (14) subjects the punctiform stream of liquid to a movement that is additionally overlaid on the direction of movement (B) and delivers the stream of liquid such that the pressure caused by the punctiform stream of liquid on the soil (15) is at least 50 N/cm2 and the stream of liquid is delivered for at least 100 ms and with a flow rate of 5 l/min to 20 l/min.

2. The method according to claim 1, wherein the active agent has a liquid, in particular water, and preferably contains no chemical herbicides and/or no biological herbicides.

3. The method according to claim 1 or 2, wherein the active agent is delivered as a stream of liquid directed in the direction of the soil (15).

4. The method according to one of claims 1 to 3, wherein the pressure caused by the stream of liquid on the soil is at least 100 N/cm², preferably at least 200 N/cm².

5. The method according to one of claims 1 to 4, wherein the punctiform stream of liquid (16) has an impact area (40) of approx. 0.01 cm² to 3 cm², preferably approx. 0.05 cm² to 2 cm², and particularly preferably approx. 0.1 cm² to 1 cm², and wherein the punctiform stream of liquid (16) is preferably subjected to a rotating movement.

6. The method according to one of the preceding claims, wherein the active agent exits the active agent delivery unit (14) at a speed of approx. 100 m/s to 350 m/s, preferably approx. 150 m/s to 300 m/s, and particularly preferably approx. 200 m/s to 250 m/s; and/or
wherein the active agent is delivered by the active agent delivery unit (14) at 12 l/min to 17 l/min, preferably 13 l/min to 15 l/min; and/or
wherein the active agent is delivered from the active agent delivery unit (14) at a delivery height in relation to the soil (15) and the delivery height is approx. 10 cm to 50 cm, preferably approx. 15 cm to 35 cm, and particularly preferably approx. 20 cm to 30 cm, and wherein the method optionally has the step of:
Setting the delivery height, preferably before the moving step, and wherein the delivery height is substantially maintained, preferably during the moving step.

7. The method according to one of the preceding claims, wherein the active agent delivery unit (14) has a plurality of individual active agent delivery units (14), which have overlapping effective ranges (34).

8. A device for targeted delivery of an active agent to vegetation on the soil, in particular on an agricultural area (15), having:
an active agent delivery unit (14) which is configured to be moved over the soil (15) along a direction of movement (B), wherein the active agent delivery unit (14) is activatable and, by activating the active agent delivery unit (14), the active agent is delivered as a punctiform stream of liquid in a limited effective range (34), and
wherein the active agent delivery unit (14) is designed such that delivery of the stream of liquid causes mechanical damage to vegetation located within the effective range (34), and
a control unit (22) which is configured:
to compare a current position of the active agent delivery unit (14) with location information (36) of a first plant type occurring on the soil (15), and
to activate the active agent delivery unit (14) when the current position of the active agent delivery unit (14) substantially corresponds to the location information (36) of the first plant type, or to deactivate an activated active agent delivery unit (14) when the current position of the active agent delivery unit (14) substantially corresponds to the location information (36) of the first plant type,
wherein the device is **characterized in that** the active agent delivery unit (14) is designed to subject the punctiform stream of liquid to a movement that is additionally overlaid on the direction of movement (B), to deliver the punctiform stream of liquid for at least 100 ms and with a flow rate of 5 l/min to 20 l/min, and further to deliver the punctiform stream of liquid such that the pressure caused by the punctiform stream of liquid on the soil (15) is at least 50 N/cm².

9. The device according to claim 8, wherein the active agent delivery unit (14) is designed to deliver the active agent as a stream of liquid directed in the direction of the soil; and/or
wherein the stream of liquid is delivered by the active agent delivery unit such that the pressure caused by the stream of liquid on the soil is at least 100 N/cm² preferably at least 200 N/cm².

10. The device according to claim 8 or 9, wherein the punctiform stream of liquid (16) has an impact area (40) of approx. 0.01 cm² to 3 cm², preferably approx. 0.05 cm² to 2 cm², and particularly preferably approx. 0.1 cm² to 1 cm², and wherein preferably the active agent delivery unit (14) is configured to subject the punctiform stream (16) to a substantially rotating movement.

11. The device according to one of claims 8 to 10, wherein the active agent exits the active agent delivery unit (14) at a speed of approx. 100 m/s to 350 m/s, preferably approx. 150 m/s to 300 m/s, and particularly preferably approx. 200 m/s to 250 m/s; and/or
wherein the active agent delivery unit (14) is designed to deliver the active agent with a flow rate of 12 l/min to 17 l/min, preferably 13 l/min to 15 l/min; and/or
wherein the device has a plurality of individual active agent delivery units (14), which have overlapping effective ranges (34).

12. The device according to one of claims 8 to 11, wherein the active agent delivery unit (14) is designed to deliver the active agent from the active agent delivery unit (14) at a delivery height in relation to the agricultural area (15), and wherein the delivery height is approx. 10 cm to 50 cm, preferably approx. 15 cm to 35 cm, and particularly preferably approx. 20 cm to 30 cm.

13. The device according to claim 12, wherein the delivery height can be set, and/or the device has a guide apparatus (24) that is associated with the active agent delivery unit (14) and keeps the delivery height substantially constant while the active agent delivery unit (14) moves over the soil (15).

## Revendications

1. Procédé de distribution ciblée d'un agent actif sur une couverture végétale sur un sol (15), en particulier sur une surface agricole utile, dans lequel le procédé présente les étapes suivantes :
déplacement d'une unité de distribution d'agent actif (14) le long d'une direction de déplacement (B) au-dessus du sol (15), dans lequel une distribution de l'agent actif sous forme de jet de liquide ponctuel est effectuée dans une zone d'action limitée (34) par activation de l'unité de distribution d'agent actif (14) ;
recoupement d'une position actuelle de l'unité de distribution d'agent actif (14) avec une information d'emplacement (36) d'un premier type de plante présent sur le sol ; et
activation de l'unité de distribution d'agent actif (14) ou désactivation d'une unité de distribution d'agent actif (14) activée, lorsque la position actuelle de l'unité de distribution d'agent actif (14) correspond à l'information d'emplacement (36) du premier type de plante,
dans lequel la distribution du jet de liquide ponctuel entraîne un endommagement mécanique d'une couverture végétale située dans la zone d'action (34), **caractérisé en ce que**
l'unité de distribution d'agent actif (14) soumet le jet de liquide ponctuel en outre à un déplacement superposé à la direction de déplacement (B) et distribue le jet de liquide ponctuel de telle façon que la pression générée par le jet de liquide ponctuel sur le sol (15) s'élève à au moins 50 N/cm² et le jet de liquide est distribué pendant au moins 100 ms et avec un débit de 5 l/min à 20 l/min.

2. Procédé selon la revendication 1, dans lequel l'agent actif présente un liquide, en particulier de l'eau, et ne contient de préférence pas d'herbicide chimique ni/ou d'herbicide biologique.

3. Procédé selon la revendication 1 ou 2, dans lequel l'agent actif est distribué sous la forme d'un jet de liquide orienté vers le sol (15).

4. Procédé selon l'une des revendications 1 à 3, dans lequel la pression générée par le jet de liquide sur le sol s'élève à au moins 100 N/cm², de préférence au moins 200 N/cm².

5. Procédé selon l'une des revendications 1 à 4, dans lequel le jet de liquide ponctuel (16) présente une surface d'impact (40) d'environ 0,01 cm² à 3 cm², de préférence d'environ 0,05 cm² à 2 cm² et de façon particulièrement préférée d'environ 0,1 cm² à 1 cm², et dans lequel le jet de liquide ponctuel (16) est de préférence soumis à un mouvement rotatif.

6. Procédé selon l'une des revendications précédentes, dans lequel l'agent actif sort de l'unité de distribution d'agent actif (14) à une vitesse d'environ 100 m/s à 350 m/s, de préférence d'environ 150 m/s à 300 m/s, et de façon particulièrement préférée d'environ 200 m/s à 250 m/s ; et/ou
dans lequel l'agent actif est distribué par l'unité de distribution d'agent actif (14) à raison de 12 l/min à 17 l/min, de préférence de 13 l/min à 15 l/min ; et/ou
dans lequel l'agent actif est distribué par l'unité de distribution d'agent actif (14) à une hauteur de distribution par rapport au sol (15) et la hauteur de distribution est d'environ 10 cm à 50 cm, de préférence d'environ 15 cm à 35 cm, et de façon particulièrement préférée d'environ 20 cm à 30 cm, et dans lequel le procédé présente optionnellement l'étape suivante :
réglage de la hauteur de distribution, de préférence avant l'étape de déplacement, et dans lequel la hauteur de distribution est de préférence substantiellement maintenue pendant l'étape de déplacement.

7. Procédé selon l'une des revendications précédentes, dans lequel l'unité de distribution d'agent actif (14) présente une pluralité d'unités de distribution d'agent actif (14) individuelles, lesquelles présentent des zones d'action (34) chevauchantes.

8. Dispositif de distribution ciblée d'un agent actif sur une couverture végétale sur un sol, en particulier sur une surface agricole utile (15), présentant :
une unité de distribution d'agent actif (14) conçue pour être déplacée le long d'une direction de déplacement (B) au-dessus du sol (15), dans lequel l'unité de distribution de l'agent actif (14) peut être activée et l'activation de l'unité de distribution d'agent actif (14) permet d'effectuer une distribution de l'agent actif sous la forme d'un jet de liquide ponctuel dans une zone d'action limitée (34), et
dans lequel l'unité de distribution d'agent actif (14) est réalisée de telle façon que la distribution du jet de liquide entraîne un endommagement mécanique d'une couverture végétale située dans la zone d'action (34), et
une unité de contrôle (22) conçue pour :
- recouper une position actuelle de l'unité de distribution d'agent actif (14) avec une information d'emplacement (36) d'un premier type de plante présent sur le sol (15) ; et
- activer l'unité de distribution d'agent actif (14) lorsque la position actuelle de l'unité de distribution d'agent actif (14) correspond substantiellement à l'information d'emplacement (36) du premier type de plante, ou désactiver une unité de distribution d'agent actif (14) activée lorsque la position actuelle de l'unité de distribution d'agent actif (14) correspond substantiellement à l'information d'emplacement (36) du premier type de plante,
dans lequel le dispositif est **caractérisé en ce que** l'unité de distribution d'agent actif (14) est adaptée pour soumettre le jet de liquide ponctuel en outre à un déplacement superposé à la direction de déplacement (B), pour distribuer le jet de liquide ponctuel pendant au moins 100 ms et avec un débit de 5 l/min à 20 l/min et pour distribuer en outre le jet de liquide ponctuel de telle façon que la pression générée par le jet de liquide ponctuel sur le sol (15) s'élève à au moins 50 N/cm².

9. Dispositif selon la revendication 8, dans lequel l'unité de distribution d'agent actif (14) est adaptée pour distribuer l'agent actif sous la forme d'un jet de liquide orienté vers le sol ; et/ou
dans lequel le jet de liquide est distribué de telle façon par l'unité de distribution d'agent actif que la pression générée par le jet de liquide sur le sol s'élève à au moins 100 N/cm², de préférence au moins 200 N/cm².

10. Dispositif selon la revendication 8 ou 9, dans lequel le jet de liquide ponctuel (16) présente une surface d'impact (40) d'environ 0,01 cm² à 3 cm², de préférence d'environ 0,05 cm² à 2 cm² et de façon particulièrement préférée d'environ 0,1 cm² à 1 cm², et dans lequel l'unité de distribution d'agent actif (14) est de préférence conçue pour soumettre le jet de liquide ponctuel (16) à un mouvement substantiellement rotatif.

11. Dispositif selon l'une des revendications 8 à 10, dans lequel l'agent actif sort de l'unité de distribution d'agent actif (14) à une vitesse d'environ 100 m/s à 350 m/s, de préférence d'environ 150 m/s à 300 m/s, et de façon particulièrement préférée d'environ 200 m/s à 250 m/s ; et/ou
dans lequel l'unité de distribution d'agent actif (14) est adaptée pour distribuer l'agent actif avec un débit de 12 l/min à 17 l/min, de préférence de 13 l/min à 15 l/min ; et/ou
dans lequel le dispositif présente une pluralité d'unités de distribution d'agent actif (14) individuelles, lesquelles présentent des zones d'action (34) chevauchantes.

12. Dispositif selon l'une des revendications 8 à 11, dans lequel l'unité de distribution d'agent actif (14) est adaptée pour distribuer l'agent actif de l'unité de distribution d'agent actif (14) à une hauteur de distribution par rapport à la surface agricole (15) et dans lequel la hauteur de distribution est d'environ 10 cm à 50 cm, de préférence d'environ 15 cm à 35 cm, et de façon particulièrement préférée d'environ 20 cm à 30 cm.

13. Dispositif selon la revendication 12, dans lequel la hauteur de distribution est réglable, et/ou le dispositif présente un système de guidage (24) associé à l'unité de distribution d'agent actif (14), lequel maintient la hauteur de distribution substantiellement constante pendant le déplacement de l'unité de distribution d'agent actif (14) au-dessus du sol (15).
